# EUROPEAN PATENT SPECIFICATION

(11) **EP 4 385 590 B1**
(45) Date of publication and mention of the grant of the patent: **21.01.2026**
(21) Application number: 23196289.5
(22) Date of filing: 08.09.2023
(51) Int. Cl.: A63F 13/213, A63F 13/46

(54) **METHOD AND DEVICE FOR PROVIDING DART GAME BY USING ARTIFICIAL INTELLIGENCE TECHNOLOGY**
VERFAHREN UND VORRICHTUNG ZUR BEREITSTELLUNG EINES PFEILWURFSPIELS UNTER VERWENDUNG EINER TECHNOLOGIE DER KÜNSTLICHEN INTELLIGENZ
PROCÉDÉ ET DISPOSITIF DE FOURNITURE DE JEU DE FLÉCHETTES À L'AIDE D'UNE TECHNOLOGIE D'INTELLIGENCE ARTIFICIELLE

(30) Priority: 16.12.2022 KR 20220177467
(43) Date of publication of application: 19.06.2024
(73) Proprietor: Phoenixdarts Co., Ltd., Seoul (KR)
(72) Inventor: HONG, Sang Uk, 06075 Gangnam-gu, Seoul (KR)
(74) Representative: Barbaro, Gaetano

(56) References cited:
- WO-A1-2021/212420
- KR-A- 20190 079 010
- US-A1- 2012 242 043
- US-A1- 2017 191 805
- US-A1- 2022 341 716
- XU JINGLIN ET AL: "Joint Multi-view 2D Convolutional Neural Networks for 3D Object Classification", PROCEEDINGS OF THE TWENTY-NINTH INTERNATIONAL JOINT CONFERENCE ON ARTIFICIAL INTELLIGENCE, 1 July 2020 (2020-07-01), California, pages 3202 - 3208, XP93127818, ISBN: 978-0-9992411-6-5, DOI: 10.24963/ijcai.2020/443
- SEELAND MARCO ET AL: "Multi-view classification with convolutional neural networks", PLOS ONE, 12 January 2021 (2021-01-12), pages 1 - 18, XP093053933, Retrieved from the Internet <URL:https://www.researchgate.net/profile/Marco-Seeland/publication/348435087_Multi-view_classification_with_convolutional_neural_networks/links/5ffefb4692851c13fe0c4515/Multi-view-classification-with-convolutional-neural-networks.pdf> [retrieved on 20230613], DOI: 10.1371/journal.pone.0245230

## Description

This application claims priority to and the benefit of Korean Patent Application No. 10-2022-0177467 filed in the Korean Intellectual Property Office on December 16, 2022.

### TECHNICAL FIELD

The present disclosure relates to an entertainment field, and more particularly, to a method and a dart game device for providing a dart game by using artificial intelligence technology.

### BACKGROUND ART

In general, a dart means a "little arrow" and is a game of throwing arrow-shaped darts at a centrifugal target labeled with numbers to score points. The dart game has the advantage that anyone can play at any time when arrowhead-shaped darts and a dart game apparatus are provided. In recent years, the dart game has developed into a global leisure activity with the development of various competition methods and the organization of scoring methods, and people of all ages easily enjoy the game.

The dart game device may perform scoring of dart pin throws in a method of determining the location where the dart pin reaches the dart target by using coordinate information assigned to segments included in the dart target. When a dart game device determines the dart pin throw on a dart target on a segment-by-segment basis, the same score may be output for the dart pins hitting at different locations within the same segment.

### [Prior Art Literature]

### [Patent Document]

[Patent Document 1] Korean Patent No. 10-2136813

US2022341716 discloses a method for automatically computing the position and score for each dart on a dartboard using a single image of the dart and dartboard captured from any camera angle. A computing device with at least one connected camera captures an image of a dartboard. The computing device performs various image processing tasks and computes the landing position of each dart present in the image and the positions of multiple dartboard calibration points. The dartboard calibration points are used to compute a transformation matrix that transforms the detected points in the image plane to corresponding points in the dartboard plane. The score of each dart is computed based on the relative positioning of the transformed points in the dartboard plane.

US2017191805 discloses an automatic scoring dart target device and a method of using the same. The device includes a dart target, a plurality of image capturing units, a background-shield and a processor. The dart target is made of solid material on which darts are shot. The image capturing units and the dart target are disposed on the same surface. The image capturing units respectively capture a plurality of images at intersecting directions. The background shield is disposed relative to the image capturing units so that the image capturing units can generate the background information. The processor calculates the scores based on the background information and locations of the dart in a selection of two images among the plurality of images individually captured by the corresponding plurality of image capturing units.

US2012242043 discloses a game apparatus including: a target including a plurality of sections divided according to a predetermined principle; a camera unit including a first camera and a second camera, the first camera being arranged to photograph at least a part of a game participant, the second camera being arranged to photograph at least a part of the target; a memory for storing at least a part of dynamic images photographed by the first camera and the second camera; a network connection unit for transmitting the dynamic images stored in the memory to a network; and a control unit for controlling operations of the first camera and the second camera and transmission of the dynamic images.

KR20190079010 discloses a dart game device comprising: a dart target configured of a plurality of segments, provided with a sensing unit for sensing a hit of a projected dart pin, and receiving the dart pin; an output unit for outputting at least one of an image related to the dart target and an image related to a player projecting the dart pin; and a control unit for monitoring a dart game play result of the player, determining whether the dart game play result satisfies an image change condition, and determining to change an image output from the output unit when the dart game play result is determined to be satisfying the image change condition.

WO2021212420 discloses a method and a related device for 3D object detection, wherein the method comprises the steps of: generating one or more fused images based on a pair of images, the pair of images including a left view image and a right view image; extracting one or more fused features from the fused images by a single backbone network of a share network with feature unmixing (SNFU); unmixing the fused features to a left view-aware feature and a right view-aware feature by a feature unmixing sub-network of the SNFU; predicting the 3D object based on the left view-aware feature and the right view-aware feature; and determining spatial features of the predicted 3D object.

The article by Xu Jinglin et al., "Joint Multi-view 2D Convolutional Neural Networks for 3D Object Classification", Proceedings of the Twenty-Ninth International Joint Conference on Artificial Intelligence, 2020-07-01, 20200711 - 20200717, International Joint Conferences on Artificial Intelligence Organization, California, Pages:3202-3208, discloses a method of 3D object classification using a joint multi-view 2D-CNNs (convolutional neural networks) learning framework.

The article by Seeland Marco and Mäder Patrick, "Multi-view classification with convolutional", PLOS ONE, 2021-01-12, pages 1-18, discloses a technique for getting visual information from different views or perspectives using a classification scheme that relies on fusing visual information captured through images depicting the same object from multiple perspectives.

### SUMMARY OF THE INVENTION

The present disclosure has been conceived to provide a method, a computer program, and a device for identifying a hit location of a dart pin by using artificial intelligence technology. Accordingly, the scope of the present invention is as defined in the appended set of claims.

### BRIEF DESCRIPTION OF THE DRAWINGS

Various aspects are described with reference to the drawings, and herein, like reference numerals are generally used to designate like constituent elements. In the exemplary embodiment below, for the purpose of description, a plurality of specific and detailed matters is suggested in order to provide general understanding of one or more aspects. However, it is apparent that the aspect(s) may be carried out without the specific and detailed matters. In other examples, well-known structures and devices are illustrated in a block diagram in order to facilitate describing one or more aspects.
FIG. 1 is a block diagram for illustrating an example of a dart game system according to some exemplary embodiments of the disclosure.
FIG. 2 is a block diagram for illustrating an example of a dart game apparatus according to some exemplary embodiments of the disclosure.
FIG. 3 is another diagram for illustrating the example of the dart game apparatus according to some exemplary embodiments of the disclosure.
FIG. 4 is a flow diagram for illustrating an example of a dart pin hit location identification method performed by the dart game apparatus according to some exemplary embodiments of the present disclosure.
FIG. 5 is another flow diagram for illustrating an example of a dart pin hit location identification method performed by a dart game device according to some exemplary embodiments of the present disclosure.
FIGS. 6A and 6B are diagrams for illustrating dart target photographed images.
FIGS. 7A and 7B are drawings for illustrating an operation of an exemplary dart pin location identification model according to some exemplary embodiments of the present disclosure.
FIG. 8 is a flow diagram for illustrating an example of a method of generating a training dataset for a dart pin location identification method performed by a computing device, according to some exemplary embodiments of the present disclosure.
FIG. 9 is a schematic diagram illustrating an example of an artificial intelligence-based dart pin location identification network model according to some exemplary embodiments of the present disclosure.
FIG. 10 is a diagram illustrating an example of a method of providing a dart game by using artificial intelligence technology according to some exemplary embodiments of the present disclosure.
FIG. 11 is a diagram illustrating an example of an operation of the artificial intelligence-based dart pin location identification network model according to some exemplary embodiments of the present disclosure.
FIG. 12 is a diagram illustrating an example of an operation for providing a dart game by using artificial intelligence technology according to some exemplary embodiments of the present disclosure.
FIG. 13 is a brief, generalized schematic diagram illustrating an example of a computing environment of a dart game device and/or dart server in which exemplary embodiments of the present disclosure may be implemented.

### DETAILED DESCRIPTION

Various embodiments and/or aspects will be now disclosed with reference to the drawings. In the following description, multiple detailed matters will be disclosed to help comprehensive appreciation of one or more aspects. However, it will also be appreciated by one skilled in the art that such aspect(s) can be embodied without the detailed matters. In the following description and the accompanying drawings, specific exemplary aspects of one or more aspects will be described in detail. However, the aspects are exemplary and some of the various methods in principles of various aspects may be used and the descriptions are intended to include all of the aspects and equivalents thereof. Specifically, in "embodiment", "example", "aspect", "illustration" and the like used in the present specification, it may not be construed that any aspect or design that will be described is more favorable or advantageous than other aspects or designs.

Hereinafter, the same reference numerals refer to the same or similar constitutional elements regardless of reference numerals, and overlapping descriptions thereof will be omitted. In addition, in describing an embodiment disclosed in the present specification, a detailed description of related known technologies will be omitted if it is determined that the detailed description makes the gist of the embodiment of the present specification unclear. Further, the accompanying drawings are only for easily understanding the embodiment disclosed in the present specification and the technical spirit disclosed by the present specification is not limited by the accompanying drawings.

Although the terms "first", "second", and the like are used for describing various devices or constitutional elements, these devices or constitutional elements are not limited by these terms. These terms are merely used for distinguishing one device or constitutional element from another device or constitutional element. Therefore, a first device or constitutional element described below may also be a second device or constitutional element in the technical idea of the present disclosure. Terms, a first-1 unit, and a first-2 unit are sub-concepts of a first and may be used to describe or distinguish between various elements or components. Terms, a second-1 unit, and a second-2 unit are sub-concepts of a second unit and may be used to describe or distinguish between various elements or components.

Unless otherwise defined, all terms (including technical and scientific terms) used in the present specification may be used as the meaning that may be commonly understood by one skilled in the art to which the present disclosure belongs. In addition, terms defined in commonly used dictionaries should not be interpreted in an idealized or excessive sense unless defined explicitly and specially.

The term "or" is intended to mean an inclusive "or" rather than an exclusive "or". That is, unless otherwise specified or clear from the context, a sentence "X uses A or B" is intended to mean one of the natural inclusive substitutions. That is, the sentence "X uses A or B" may be applied to any of the case where X uses A, the case where X uses B, or the case where X uses both A and B. Further, it should be understood that the term "and/or" used in the present specification designates and includes all available combinations of one or more items among enumerated related items.

The terms "information" and "data" used herein may often be used interchangeably. The description "a constitutional element or layer is "on" another constitutional element or layer" includes all of cases where the constitutional element or layer is formed directly on the other constitutional element or layer, and where another constitutional element or layer is interposed therebetween. In contrast, the description "a constitutional element is "directly on" another constitutional element refers to a case where there is no intervening constitutional element or layer present.

Spatially relative terms, such as "below", "beneath", "lower", "above" and "upper" may be used herein to easily describe the relationship of one constitutional element to other constitutional element(s) as illustrated in the drawings. It should be understood that the spatially relative terms are intended to encompass different orientations of a device in use or operation, in addition to the orientation depicted in the drawings.

For example, a constitutional element described as "below" or "beneath" another constitutional element could be placed "above" another constitutional element if the constitutional element shown in the drawing is turned over. Thus, the exemplary term "below" or "beneath" may encompass both orientations of "above" and "below" or "beneath". The constitutional element may also be oriented in different directions, and the spatially relative descriptors used herein may be interpreted according to the orientations.

When it is mentioned that a certain constitutional element is "connected" or "coupled" to another constitutional element, it should be understood that the certain constitutional element may be directly connected or coupled to the other constitutional element or another intervening constitutional element may be located therebetween. Conversely, when a constitutional element is referred to as being "directly connected" or "directly coupled" to another constitutional element, it is to be understood that there is no intervening constitutional element present.

The suffixes "module" and "unit" or "part" for constitutional elements used in the following description are given or used interchangeably only for ease of writing the specification, and thus do not themselves have distinct meanings or roles.

Objects and advantages of the present disclosure and technical elements for accomplishing the objects and advantages will be apparent by referring to embodiments described below in detail in connection with the accompanying drawings. In describing the present disclosure, when the detailed description of the known functions or configurations is determined as unnecessarily obscuring the gist of the present disclosure, the detailed description will be omitted. In addition, terms described below are defined in light of functions of the present disclosure, which may vary depending on a user, the intent of an operator, a convention, or the like.

However, the present disclosure is not limited to the following embodiments and may be implemented in various forms. These embodiments are provided only to make the present disclosure complete and to fully inform one skilled in the art of the scope of the disclosure, and the present disclosure is only defined by the scope of the claims. Therefore, the definition should be made based on the contents throughout the present specification.

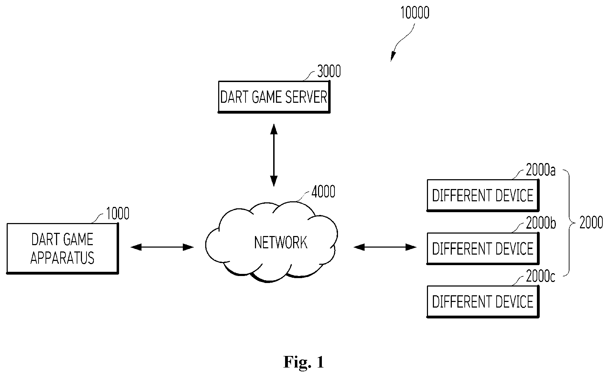

Hereinafter, a dart game device, a dart game system, and a dart game method utilizing the dart game device according to the present disclosure will be described with reference to FIGS. 1 to 12. In the meantime, in the present disclosure, for convenience of description, a player performing a dart game and a dart game apparatus playing a dart game are used interchangeably without distinguishing between them, and the accompanying drawings are intended only to facilitate an understanding of the exemplary embodiments disclosed in the present specification, and it is to be understood that the technical spirit disclosed in the present specification are not limited by the accompanying drawings and include all modifications, equivalents, or substitutions that are within the spirit and the technical range of the present disclosure.

FIG. 1 is a block diagram illustrating an example of a dart game system 10000 according to some exemplary embodiments of the present disclosure.

Referring to FIG. 1, a dart game system 10000 may include a dart game apparatus 1000, at least one different device 2000, a dart game server 3000, and a network 4000. However, the components described above are not essential to implementing the dart game system 10000, and the dart game system 10000 may have more or fewer components than those listed above.

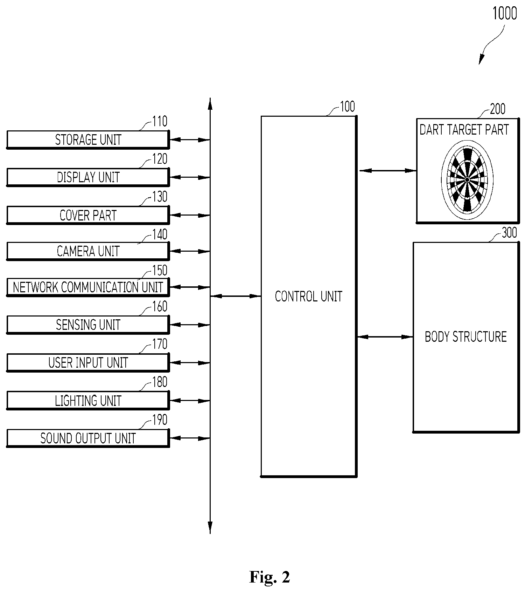

The dart game apparatus 1000 may provide a dart game to a player who is participating in the dart game online. However, the dart game apparatus 1000 does not only provide online dart games to players, but may also provide offline dart games. Hereinafter, an example of a dart game device 1000 according to the present disclosure will be described with reference to FIGS. 2 to 12.

The different device 2000 may be at least one of devices associated with the players other than the dart game apparatus 1000. For example, the different device 2000 may be a dart game apparatus other than the dart game apparatus 1000, a mobile device associated with the dart game apparatus 1000 (for example, a user's smartphone with dart game-related software installed), or a server.

For example, different device 2000a may be at least one dart game apparatus that is participating in a dart game provided by the dart game apparatus 1000, or is waiting to participate in a dart game.

In another example, different device 2000b may be a mobile device in conjunction with the dart game apparatus 1000 for presenting information regarding a dart game in which the dart game apparatus 1000 is participating to a player.

In another example, different device 2000c may be a server for providing the same dart game to a plurality of dart game apparatuss. The server herein may be the same device as the dart game server 3000 illustrated in FIG. 1, or may be a different, physically separate server. However, the present disclosure is not limited thereto.

The dart game server 3000 may include, for example, any type of computer system or computer device, such as, a microprocessor, a mainframe computer, a digital processor, a handheld device, or a device controller.

In the present disclosure, the dart game server 3000 may determine dart game players to participate in an online dart game. A dart game server 3000 may organize and manage dart game competitions conducted online. The dart game server 3000 may store user login information, user play result information, and the like.

Specifically, the dart game server 3000 may receive first play result information from a plurality of devices participating in a first game. The dart game server 3000 may then determine a plurality of players to participate in a second game based on the first play result information. Here, the play result information may be information about the result of a dart game that is generated as the players participating in the dart game progress the dart game. The play result information may include any form of result information generated by the play of the dart game.

For example, the play result information may include at least one of information about a ranking associated with a dart game result of each of the players, information about a score associated with a dart game result of each of the players, information about an image of a player playing the dart game, information about a pre-stored image representing a player, information about the time at which each of the players ended the dart game, and identification information of each of the players who participated in the dart game.

For example, the dart game server 3000 may determine a plurality of players having a predetermined ranking as players to participate in a second dart game, based on information about rankings included in first play result information of a first dart game. However, the present disclosure is not limited thereto.

In the present disclosure, the dart game server 3000 may be plural. Further, each of the plurality of dart game servers may distribute at least one dart game to the dart game apparatus 1000 or each of different devices 2000.

The dart game system 10000 formed of the single dart game server 3000 may be difficult to provide an enjoyable dart game to players due to limitations in a network, and the like. Thus, in the exemplary embodiment of the present disclosure, the plurality of dart game servers 3000 may be provided. Each of the plurality of darts game servers may distribute at least one dart game session or at least one sub-session to players. However, the present disclosure is not limited thereto.

The network 4000 may be configured regardless of its communication mode, such as a wired mode and a wireless mode, and may be configured of various communication networks, such as a Local Area Network (LAN) and a Wide Area Network (WAN).

In the present disclosure, the network 4000 or the dart game server 3000 may be a cloud-based system. Here, the could-based system is a system in which users (dart game apparatuses) share network resources, and may be a computing environment which a user borrows as much as needed and is used through the network at a desired time. The cloud-based system may include deployment models, such as public cloud, private cloud, hybrid cloud, community cloud, or service models, such as Infrastructure as a Service (IaaS), Platform as a Service (PaaS), or Software as a Service (SaaS). However, the network 4000 or the dart game server 3000 of the present disclosure is not limited to the cloud-based system, and a centralized or edge computing network 4000 or the dart game server 3000 may also be implemented according to the exemplary embodiment of the present disclosure.

According to the above-described configuration, the dart game system 10000 may include the dart game apparatus 1000, different device 2000, and the dart game server 3000 to provide a real-time dart game to a plurality of players participating in a dart game online.

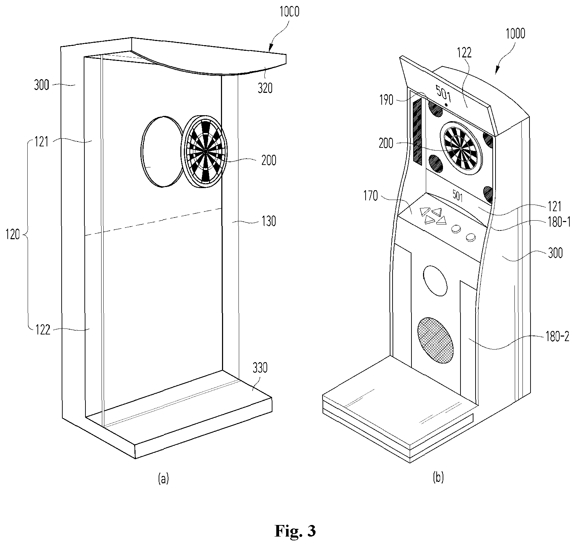

On the other hand, the dart game apparatus 1000 or different device 2000 may include components that enable a player to play a dart game. Hereinafter, components of the dart game apparatus 1000 according to the present disclosure will be described with reference to FIGS. 2 and 3.

FIG. 2 is a block diagram for illustrating an example of the dart game apparatus according to some exemplary embodiments of the disclosure. FIG. 3 is diagram for illustrating another example of the dart game apparatus according to some exemplary embodiments of the disclosure.

Referring to FIG. 2, the dart game apparatus 1000 may include at least one of a control unit 100, a display unit 120, a storage unit 110, a cover part 130, a camera unit 140, a network communication unit 150, a sensing unit 160, a user input unit 170, a lighting unit 180, a sound output unit 190, a dart target part 200, and a body structure 300. However, the present disclosure is not limited thereto.

The control unit 100 may generally process the overall operation of the dart game apparatus 1000. The control unit 100 may process signals, data, information, and the like that are input to or output from the components of the dart game apparatus 1000, or drive an application program stored in the storage unit 110, to process or provide appropriate information or functionality to the user.

For example, a dart game may determine which of a plurality of thrown dart pins is closest to a predetermined location within the dart target (for example, a bull's eye corresponding to the center portion of the dart target). **In** response to the determination, the dart game may determine which player will be the first to throw a dart pin in the next dart game.

For example, in the case of a dart game, the control unit 100 may determine a score for a player's throw of a dart pin detected by the sensing unit 160. Further, the control unit 100 may transmit the determined score to different device 2000 through the network communication unit 150. **In** addition, the control unit 100 may receive play-related data, including scores associated with the dart game, from different device 2000 through the network communication unit 150. Further, the control unit 100 may control the display unit 120 to display information related to the dart game on the display unit 120 based on play-related data including scores of other players and scores determined by the dart game apparatus. Here, the play-related data may be data that includes any information that is generated by a player participating in the dart game as the player progresses through the dart game, or that may be used to participate in the dart game. The play-related data may then be received again when the dart game changes. **In** the exemplary embodiment of the present disclosure, the sensing unit 160 may work with a dart pin location identification network model to determine which part of the dart target the dart pin has hit.

For example, the play-related data may include at least one of identification information for each player participating in the darts game, information about the ranking associated with the dart game for each player who participated in the dart game, information about an image of a player playing the dart game, play result data for a dart game of each player participating in the dart game, information about a pre-stored image representing a player, and information about a score associated with a dart game of each of the players participating in the dart game.

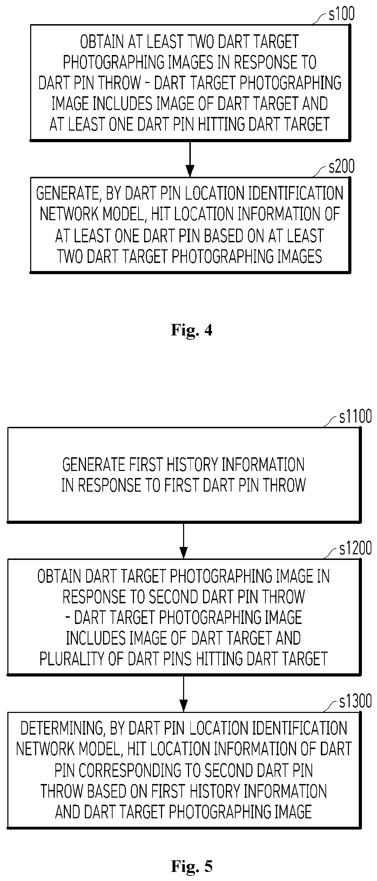

In some exemplary embodiments of the present disclosure, the control unit 100 may control the overall operation of the dart game device 1000. In the exemplary embodiment, the control unit 100 may perform dart pin hit location identification. The method of the dart pin hit location identification will be described with reference to FIGS. 4 to 7.

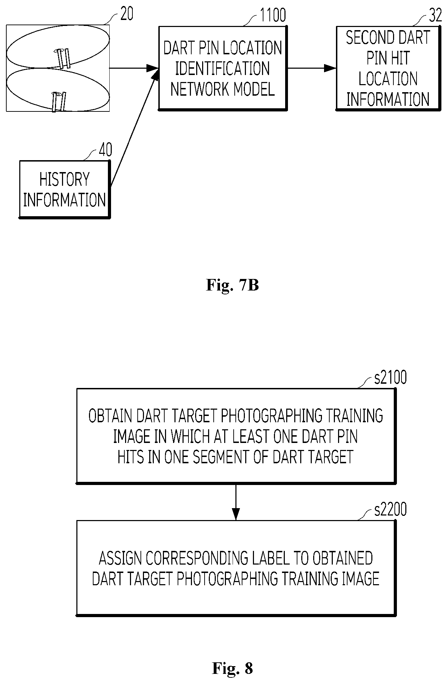

In some exemplary embodiments of the present disclosure, the control unit 100 may perform a method of generating a training dataset for dart pin location identification. The method of generating a training dataset for dart pin location identification will be described in detail with reference to FIG. 8.

The storage unit 110 may include a memory and/or a persistent storage medium. The memory may include at least one type of storage medium among a flash memory type, a hard disk type, a multimedia card micro type, a card type of memory (for example, an SD or XD memory), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, and an optical disk.

The storage unit 110 may pre-store at least one image associated with the dart game. In this case, in response to receiving the play-related data from the different device 2000 through the network communication unit 150, the control unit 100 may determine a display image associated with the play-related data among at least one pre-stored image. Then, the display unit 120 may display the determined display image.

Specifically, the information related to the dart game displayed on the display unit 120 may be a play-related image of a player of a different device 2000. When the network communication unit 150 directly receives an image photographed through the camera unit from different device 2000, the display unit 120 may display the received image.

For example, the display unit 120 may output any form of information related to dart game play. For example, the display unit 120 may be configured to surround the dart target 200. At the extended location along the outer periphery of a specific segment of the dart target, score information corresponding to the segment may be output through the display unit 120. The display unit 120 may output the location of the plurality of thrown dart pins within the dart target 200. The display unit 120 enlarges and displays the locations of the hitting dart pins in the dart target 200 based on the location information of the plurality of thrown dart pins, to more intuitively show the user which dart pins were thrown close to the center portion of the dart target 200.

However, depending on traffic conditions between the dart game apparatus 1000 and a different device 2000, the network communication unit 150 may only receive play-related data from a different device 2000 that does not include a play-related image. In this case, the control unit 100 may determine the display image associated with the play-related data among at least one image pre-stored in the storage unit 110 as the display image to be displayed on the display unit 120.

For example, the control unit 100 may determine that a player on a different device 2000 has hit a score corresponding to the triple area based on play-related data from different device 2000 received through the network communication unit 150. In this case, the control unit 100 may determine a display image associated with the triple among the plurality of display images pre-stored in the storage unit 110 as the display image to be displayed on the display unit 120.

According to some exemplary embodiments of the present disclosure, the storage unit 110 may store dart target photographing images or dart target photographing training images generated by the camera unit 140. For another example, the storage unit 110 may store externally received dart target photographing images or dart target photographing training images.

In the exemplary embodiment, the camera unit 140 may include one or more cameras. For example, the camera unit 140 may photograph a user throwing a dart pin to obtain an image for determining whether the user matches a user playing a corresponding dart game. For example, the camera unit 140 may include a plurality of cameras, and one or more cameras among the plurality of cameras may photograph the dart target 200 and another one or more cameras among the plurality of cameras may photograph the user. For example, the plurality of cameras in the camera unit 140 may photograph the dart target 200 hit by the dart pin from different directions. Accordingly, a plurality of dart target images corresponding to one dart pin throw may be generated. The plurality of dart target images may be input to the dart pin location identification network model to be used to accurately identify hit location information of the dart pin in the dart target 200.

In the exemplary embodiment, The display unit 120 may display (output) information processed by the dart game apparatus 1000.

For example, the display unit 120 may display information related to the dart game based on play-related data from different device 2000 received through the network communication unit 150. Here, the information related to the dart game may be an image related to a player's play on the different device 2000, or may be an image generated based on dart game play result information of the different device 2000.

The display unit 120 may be provided on the front surface of the dart game device 1000.

For example, referring to FIG. 3A, the display unit 120 may be provided on the front surface of the dart game apparatus 1000 to display information related to the dart game.

**In** the present disclosure, the display unit 120 may include a plurality of display areas. For example, the display unit 120 may include a first display area 121 and a second display area 122. Each of the first display area 121 and the second display area 122 may be independently controlled by the control unit 100. Alternatively, each of the first display area 121 and the second display area 122 may be controlled by the control unit 100 such that a single image is implemented across the first display area 121 and the second display area 122. For example, the first display area 121 and the second display area 122 may operate in the form of display modules that are independent of each other. As another example, the first display area 121 and the second display area 122 may be one module rather than separate, independent modules.

**In** the exemplary embodiment, the first display area 121 is a display area in the form of surrounding the outer periphery of the dart target 200 and may output score information for the dart pin hit, an image corresponding to the dart pin hit, and the like when the dart pin hits the dart target 200. The second display area 122 may output a dart pin throw image of a user throwing a dart pin at the dart target 200. The second display area 122 may enlarge the dart target 200 hit by the dart pins and intuitively output the location within the dart target 200 where the dart pins have hit.

**In** the exemplary embodiment, the camera unit 140 may determine that the first round of a first player who threw the three dart pins has ended and that the dart pins that hit the dart target 200 have been removed by the user. Accordingly, the dart game may be provided for the next user's next round to proceed, even though the user does not take any action after ending his or her round. For example, the camera unit 140 may be located on at least one of a top portion, a top end, a portion protruding from the top portion toward the player to photograph the dart target 200 of the dart game device 1000.

In the exemplary embodiment, the sensing unit 160 may determine that the first round of the first player throwing the three dart pins has ended and the dart pins that hit the dart target 200 have been removed by the user. Accordingly, the dart game may be provided for the next user's next round to proceed, even though the user does not take any action after ending his or her round.

In FIG. 3A, the outer peripheral surface of the dart target 200 may have a lighting unit formed in a shape corresponding to the outer peripheral shape of the dart target 200. The lighting unit may be operable such that, when the camera unit photographs the dart target 200 to generate an image for dart pin location identification, an image may be generated that is robust to the degree of ambient brightness. In other words, because light may be generated from the outer peripheral surface of the dart target 200 through the lighting unit, when the dart target 200 having the thrown dart pin is photographed, a good image may be obtained even if the external lighting is dim.

Referring to FIG. 3B, , the display unit 120 may be implemented as at least one display unit. Further, each of at least one display unit may be independently controlled by the control unit 100.

For example, the display unit 120 may include a first display unit located at a lower portion of the dart target part 200 and having the first display area 121 and a second display unit located at an upper portion of the dart target part 200 and having the second display area 122. Further, each of the first display unit and the second display unit may be independently controlled by the control unit 100.

The cover part 130 may be provided adjacent to the display unit 120 to protect the display unit 120.

For example, referring to FIG. 3A, the cover part 130 may be positioned between a virtual side extending upwardly from a throw line and the display unit 120. In this case, the cover part 130 may be located adjacent to the display unit 120, thereby reducing the risk of breakage of the display unit 120.

Referring again to FIG. 2, the camera unit 140 may include one or more cameras. The image frames processed by the camera unit 140 may be stored in the storage unit 110 or transmitted externally through the network communication unit 150. The camera unit 140 may be equipped with two or more cameras depending on the usage environment.

In the present disclosure, the control unit 100 of the dart game apparatus 1000 may accept or reject a player's login request to the dart game apparatus 1000 based on an image including the player photographed through the camera unit 140.

For example, the control unit 100 may receive input from a player to log in the dart game apparatus 1000 through the user input unit 170. In this case, the control unit 100 may control the camera unit 140 to photograph an image that includes the player currently operating the user input unit 170. The control unit 100 may accept or reject a player's login request based on a comparison between facial information contained in the pre-stored player's identification information and facial information recognized from the photographed image.

In the exemplary embodiment, the user input unit 170 may include an input device including a plurality of buttons. In the exemplary embodiment, the user input unit 170 may be implemented through the display unit 120 configured as a touchscreen.

In another example, the control unit 100 may request a user's login input through the display unit 120. The display unit 120 may, under the control of the control unit 100, output information necessary for the user to proceed with the login through camera photographing or the login through the user input unit 170.

As another example, the control unit 100 may also allow user login to the dart game apparatus 1000 through communication with the different device 2000. **In** this case, the control unit 100 may control the network communication unit 150 to transmit and receive information for user authentication with the different device 2000.

**In** this disclosure, the control unit 100 may compare the facial information recognized from the photographed image with the facial information contained in the pre-stored player's identification information after the time of the player's initial login operation. An image of the player's face, and the like photographed by the camera unit 140 may be output on the display unit 120. An indication to align the player's face with a specific area on the display unit 120 may be output. When the player aligns his/her face with the area, the player's face may be captured, and similarity may be determined by comparing the captured face with a pre-stored face of the player. Based on the comparison between the similarity and a predetermined threshold, a face photographing-based login for the player may be performed.

Specifically, the control unit 100 may photograph a play image through the camera unit 140 in order to transmit a play image associated with a player of the dart game apparatus 1000 to the different device 2000. The control unit 100 may compare facial information recognized from the newly photographed play image with the facial information contained in the identification information used for the login. Based on the result of the comparison, the control unit 100 may determine whether the current player is the same player as the player at the time of login. **In** this case, cheating, such as the presence of surrogate players, which may occur as the dart game apparatus 1000 and different devices 2000 participate in a dart game online, may be prevented. Here, the surrogate player may be a player different from the player logged into the dart game apparatus 1000.

In the exemplary embodiment, the display unit 120 may output a specific indication or user recognition at a predetermined location within the displayed screen. Examples of the indication may include an indication in the form of a curve, an indication in the form of a hat, an indication in the form of a person, and the like. The user may be instructed to align his/her image that is being photographed by the camera unit 140 with a specific indication displayed on the display unit 120. When the user aligns his/her image that is being photographed by the camera unit 140 with the specific indication displayed on the display unit 120, the dart game device 1000 or the dart server 3000 may compare the photographed image of the user (for example, a facial image) with a pre-stored image of the user to determine whether to allow the user to log in.

In another example, the control unit 100 may determine whether a player of the dart game is cheating by comparing the pre-stored play image that includes the player's play action with a current play image of the player. For example, when a dart pin projection image of a player included in the current play image differs by more than a predetermined threshold from a past dart pin projection image of the corresponding player, the control unit 100 may determine that the current dart pin projection image has a high probability of cheating. A predetermined deep learning algorithm related to image processing or image analysis may be used to compare two or more images.

In some exemplary embodiments of the present disclosure, the camera unit 140 may generate a dart target photographing image or a dart target photographing training image under control of the control unit 100.

The network communication unit 150 may be configured regardless of its communication mode, such as a wired mode and a wireless mode, and may be configured of various communication networks, such as a Local Area Network (LAN) and a Wide Area Network (WAN).

The network communication unit 150 may detect the connection state of the network with different devices 2000 or the dart game server 3000, and the transmission and reception speed of the network. However, without limitation, traffic information related to the transmission and reception speed of the network and the like may also be received from the dart game server 3000.

Data received through the network communication unit 150 may be displayed on the display unit 120, or transmitted to different device 2000.

For example, when the network communication unit 150 receives data related to the dart game from the different device 2000 or the dart game server 3000, the network communication unit 150 may transmit the received data to different device, such as a mobile device. A method of providing a dart game according to the present disclosure may allow two or more devices to participate in the same dart game. Accordingly, the player of the dart game apparatus 1000 may need to wait for one, two, or more plurality of players to participate in the same dart game. Thus, the network communication unit 150 may transmit data related to the dart game to a player's mobile device or the like. In this case, the player may check whether he/she has matched with another player through the mobile device while taking a break.

According to some exemplary embodiments of the present disclosure, the control unit 100 may provide an offline dart game to the player of the dart game apparatus 1000 when the number of players participating in the dart game is not met and the player is waiting for another player.

Specifically, the control unit 100 may receive input from a player to participate in the dart game through the user input unit 170. In this case, the control unit 100 may generate a dart game or participate in one of a plurality of pre-generated dart games. However, when the number of players on different devices 2000 is insufficient, the player on the dart game apparatus 1000 may have to wait for a match to be made. In this case, the control unit 100 may provide an offline dart game to the player of the dart game apparatus 1000 in conjunction with searching for other players so that a match can be made with another player.

According to some exemplary embodiments of the present disclosure, a dummy player may be generated by the dart game server 3000 when the number of players to participate in the dart game is insufficient. Here, the dummy player may be a virtual player rather than a real player. Then, the dart game server 3000 may make the generated dummy player participate in at least one dart game that has an insufficient number of players. For example, a dummy player may be generated based on play result data of a real player, the dummy player may perform the play in the similar form with a predetermined real player as if the real player playing with the dummy player plays a real-time dart game with a real opponent player.

The sensing unit 160 may detect the play of the player performed for the dart target part 200. For example, the sensing unit 160 may detect a hit location of the dart pin. The sensing unit 160 may electrically convert a score corresponding to the area in which the dart was hit and transmit the converted score to the control unit 100. Further, the sensing unit 160 may transmit information about the area in which the dart pin was hit to the control unit 100, and the control unit 100 may calculate a score based on the information about the hit location of the dart pin obtained from the sensing unit 160.

For example, the sensing unit 160 may sense the pressure applied to the dart target by a thrown dart pin. In this case, the sensing unit 160 may transmit information to the control unit 100 that the sensing unit 160 has sensed the pressure applied to the dart target by the thrown dart pin. Then, the control unit 100 may control the dart target to be photographed by the camera unit 140 to detect the hit location of the dart pin. The control unit 100 may obtain information about the hit location of the dart pin by using the photographed image, and may calculate a score based on the information about the hit location of the dart pin obtained using the photographed image.

The user input unit 170 may receive user input for controlling the dart game apparatus 1000.

For example, referring to FIG. 3B, the user input unit 170 may be implemented as at least one of a keypad, a dome switch, a touch pad (capacitive/static), a jog wheel, and a jog switch. However, the present disclosure is not limited thereto.

Additionally, the user input unit 170 may include a short range communication unit (not illustrated). If the user input unit 170 includes a short range communication unit of the network communication unit 150, the user input unit 170 may be configured to receive user input entered by an external console device. As short range communication technology, Bluetooth, Radio Frequency Identification (RFID), Infrared Data Association (IrDA), Ultra Wideband (UWB), ZigBee, and the like may be used.

The lighting unit 180 may be disposed on various portions of the dart game apparatus 1000 to convey a visual effect to the player of the dart game apparatus 1000.

For example, referring to FIG. 3A, a first lighting unit 180-1 may be formed extending in a vertical direction along a frontward protruding portion of the body structure 300. Further, a second lighting unit 180-2 may be disposed at a front lower portion of the body structure 300. And the first lighting unit 180-1 and the second lighting unit 180-2 may output a signal to indicate the occurrence of an event in the dart game apparatus 1000. Examples of the event occurring in the dart game apparatus 1000 may include identifying a dart game player, hitting a dart, changing a dart game player, and ending a game.

The lighting units 180-1 and 180-2 may include a Light Emitting Diode (LED), so that a user may be notified of the occurrence of an event by flickering the LED. Additionally, the lighting unit 180 may vary and output the form of light emitted, the intensity of the light emitted, or the frequency of the flickering, depending on where the dart pin reaches the dart target part.

The lighting units 180-1 and 180-2 may output a preset pattern of lighting in conjunction with the acceptance of the player's login request determined by the control unit 100. Here, the lighting of the preset pattern may be predetermined from the player of the dart game apparatus 1000.

Referring again to FIG. 2, the sound output unit 190 may output audio data stored in the storage unit 110, such as game sound effects, game action instructions, and game method descriptions. Additionally, the sound output unit 190 may output sound signals associated with functions performed in the dart game apparatus 1000 (for example, game sound effects). The sound output unit 190 may include a receiver, a speaker, a buzzer, and the like. Additionally, the sound output unit 190 may vary and output a volume/type of music depending on where the dart pin has reached the dart target.

In the present disclosure, the sound output unit 190 may output a sound, music, or voice that corresponds to the play-related data among a plurality of pre-stored sounds, music, or voices based on the dart game play-related data of the player of the dart game apparatus 1000.

Specifically, the control unit 100 of the dart game apparatus 1000 may recognize data related to the player's previous play when the player's login request is accepted. The control unit 100 may control the sound output unit 190 to output a preset sound or the like based on the previous play-related data. Alternatively, when the control unit 100 accepts the player's login request, the control unit 100 may determine, based on the identification information of the player, whether a pre-stored sound, music, or voice message or the like is present. Further, when it is determined that at least one of the pre-stored sounds, music, or voice messages is present, the control unit 100 may control the sound output unit 190 to output a corresponding sound or the like.

The control unit 100 of the dart game apparatus 1000 may generate a guidance message personalized to the player based on history information related to the result of the dart game play of the player when the player's login is complete. For example, when the time of the previous play of the player is a week ago, the control unit 100 may generate a guidance message "You're logging in after a week, nice to see you." In another example, if a player has a history of winning dart game tournaments, the control unit 100 may generate a guidance message, "Welcome to the winner of XX tournament". In this way, the control unit 100 may generate personalized messages appropriate to the player from the player's history information to provide the player with a more entertaining effect.

The dart target part 200 may include a scoreboard with a bull's eye in the center, and areas (segments) separated by concentric circles centered on the bull's eye and straight lines extending radially from the bull's eye, each with an individual score. A plurality of receiving grooves (bits or holes) may be formed on the scoreboard into which the tip of the dart pin may be inserted. In this case, the scoring arrangement of the dart target part 200 and the shape of the scored areas may be varied. Additionally, the dart target part 200 may be implemented in the form of a touchscreen.

The body structure 300 may be formed to extend in a direction perpendicular to the ground to form the appearance of the dart game apparatus 1000. Further, the body structure 300 may include the display unit 120, the user input unit 170, the dart target part 200, and other components described above. However, the present disclosure is not limited thereto.

The display unit 120 provided on the front surface of the body structure 300 may display information related to the dart game. Here, the information related to the dart game may include play images of other players, images generated based on the play related data of other players, or information related to play time constraints.

In FIG. 3, exemplary dart game devices 1000 are illustrated with reference to FIGS. 3A and 3B, but at least a part of the dart game device 1000 in FIG. 3A and at least a part of the dart game device 1000 in FIG. 3B may be interchangeable.

Hereinafter, an example of a method of generating information related to the dart game by the control unit 100 of the dart game apparatus 1000 according to the present disclosure will be described with reference to FIGS. 4 to 7.

FIG. 4 is a flow diagram for illustrating an example of a dart pin hit location identification method performed by the dart game apparatus according to some exemplary embodiments of the present disclosure.

In some exemplary embodiments of the present disclosure, a dart pin hit location identification method may include obtaining at least two dart target photographing images in response to a dart pin throw (s100). Herein, the dart target photographing image may include an image of a dart target and at least one dart pin that had hit the dart target.

Specifically, the control unit 100 may recognize that an event of throwing a dart pin by a player has occurred. For example, as described above, the sensing unit 160 may sense the pressure applied to the dart target by the thrown dart pin. In this case, the sensing unit 160 may transmit information to the control unit 100 that the sensing unit 160 has sensed the pressure applied to the dart target by the thrown dart pin. In another example, the control unit 100 may recognize through the camera unit 140 that an event has occurred in which a player throws a dart pin. The control unit 100 may control the camera unit 140 to photograph the dart target to detect the hit location of the dart pin. In this case, the dart target photographing image may include an image of the dart target and at least one dart pin that had hit the dart target.

According to some exemplary embodiments of the present disclosure, at least two dart target photographing images may be generated by at least two cameras, each positioned in a predetermined direction. In this case, the number of at least two dart target photographing images may correspond to the number of at least two cameras.

More specifically, the plurality of dart target photographing images may be obtained by using the plurality of cameras so that the control unit 100 may more accurately identify a hit location of the dart pin by using the plurality of dart target images when a throw of the dart pin occurs. For example, the camera unit 140 may be a plurality of cameras, and in this case, the dart target photographing images may be a plurality of images of the dart target photographed from different directions. For example, the camera unit 140 may include two cameras installed on the left and right sides of the top of the dart game apparatus. In this case, the control unit 100 may obtain a dart target photographing image that is photographed by a camera located on the left side of the top of the dart game apparatus in a direction facing the dart target. Further, the control unit 100 may obtain a dart target photographing image that is photographed by a camera located on the right side of the top of the dart game apparatus in a direction facing the dart target. However, the present disclosure is not limited thereto, and the camera position and photographing direction may vary.

The number of dart target photographing images may correspond to the number of cameras. For example, when the number of cameras is 2, the number of dart target photographing images may be 2. For another example, the number of dart target photographing images may be an integer multiple of the number of cameras. Specifically, the plurality of cameras may photograph the dart target n times at intervals of a predetermined time to avoid obtaining only images from which the dart target and the dart pins cannot be identified due to, for example, frequent changes in lighting conditions around the dart game apparatus. In this case, the number of dart target photographing images may be n times of the number of cameras. However, the number of dart target photographing images is not limited thereto, and the dart target photographing images may be generated in various numbers by various methods.

In some exemplary embodiments of the present disclosure, the dart pin hit location identification method may include generating, by a dart pin location identification network model, hit location information of the at least one dart pin based on at least two dart target photographing images (s200).

Specifically, in the case of obtaining the dart target photographing image, the control unit 100 may generate hit location information of a dart pin identified in the dart target photographing image by using a dart pin location identification network model. In some examples, the hit location information of the dart pin may include segment location information. For example, the hit location information of the dart pin may include information that indicates the location (or scoring area) of the segment where the dart pin hit. In some examples, the hit location information of the dart pin may include information indicating the location of a bit (or receiving groove, hole) in the segment where the dart pin hit. However, the hit location information is not limited thereto, and the hit location information may include various information.

The dart pin location identification network model may be implemented by using a variety of image processing algorithms that may generate hit location information of the dart pin from the dart target photographing images. For example, the dart pin location identification network model may include a sub-model that obtains a bounding box image in which the location of the dart pin may be identified from the dart target photographing image, and a sub-model that processes the obtained bounding box image to generate hit location information of the dart pin. Additionally, the dart pin location identification network model may include a sub-model for determining hit location information of the dart pin that hits last when hit location information of multiple dart pins is obtained. However, the dart pin location identification network model is not limited thereto, and may be implemented in a variety of methods.

Hereinafter, the following describes an exemplary operation of the dart pin location identification network model that processes two or more dart target photographing images to generate hit location information of the dart pin.

In some exemplary embodiments of the present disclosure, the generating of the hit location information of the dart pin based on the at least two dart target photographing images (s200) may include generating input data by performing a merging operation on the at least two dart target photographing images, and generating hit location information of the at least one dart pin by processing the input data by the dart pin location identification network model.

As described above, the plurality of dart target photographing images may be obtained by using a plurality of cameras so that the control unit 100 may more accurately identify the hit location of the dart pin by using the plurality of dart target photographing images. For example, the control unit 100 may obtain two dart target photographing images by using two cameras by recognizing the throwing of a dart pin.

In some examples, the control unit 100 may generate two dart target photographing images as input data that may be processed by the dart pin location identification network model. For example, the control unit 100 may generate input data by performing a merging operation on at least two dart target photographing images. Specifically, for example, the control unit 100 may obtain two bounding box images corresponding to two dart target photographing images, respectively. Here, the algorithm for obtaining the bounding box image may be a variety of object detection algorithms. In some examples, various images for object detection may also be used to replace the bounding box image. Then, the control unit 100 may merge the two bounding box images into input data that is one image. In another example, the control unit 100 may merge two dart target photographing images into a single image. Then, the control unit 100 may obtain input data including two bounding box images from one image.

In some exemplary embodiments of the present disclosure, the input data may be an image of at least two bounding box images disposed in a predetermined direction. For example, the input data may be an image of two bounding box images disposed vertically. However, the input data is not limited thereto, and the input data may be an image that includes a bounding box image disposed according to various methods.

The dart pin location identification network model may generate the hit location information of the dart pin by processing the aforementioned input data described above. As described above, the hit location information of the dart pin may include the location information of the segment hit by the dart pin. In addition, the hit location information of the dart pin may include information indicating the location of the bit within the segment hit by the dart pin. However, the hit location information of the dart pin is not limited thereto, and may be various.

The dart pin location identification network model may be a network model trained by using training image data including at least two dart target photographing images or at least two bounding box images, and a training dataset including a label corresponding to training image data. Here, the label may include information about the location of a segment hit by a dart pin identified from the training image data, or the location of a bit on the segment. In this case, the dart pin location identification network model may process the input data based on the at least two dart target photographing images to output hit location information including the location of the segment hit by the dart pin or the bit location of the segment. However, the dart pin location identification network model is not limited, and may be trained by using various training datasets.

In some exemplary embodiments of the present disclosure, the generating of, by the dart pin location identification network model, the hit location information of the at least one dart pin based on at least two dart target photographing images (s200) may include performing preprocessing on the dart target photographing images for noise removal.

In the exemplary embodiment, since the dart game apparatus 1000 may be installed in various surrounding environments, a dart target photographing image may be obtained that includes a plurality of noises generated by too weak lighting, irregular lighting, and the like in the dart target photographing. In order to prevent the problem, the control unit 100 may perform preprocessing for noise removal. For example, the preprocessing for noise removal may include image filtering. For example, when an image is represented in frequency bands, high frequencies typically appear in the place where there is a lot of variation in brightness (for example, in border regions), and the general background may be expressed with low frequencies. If the high frequencies of the image are removed, a blurring effect may occur. The removal of the low frequencies of the image generates the effect that a region of an object appearing on the image may be identified. Thus, the noise removal and blurring may be performed by using a Low-Pass Filter (LPF) and a High-Pass Filter (HPF). Additionally, bilateral filtering is used to prevent the blurring effect from blurring the boundaries, so that it is possible to efficiently perform Gaussian Blur processing while preserving the boundaries.

As another example, the preprocessing for noise removal may include Gaussian Filtering. While a box filter uses a kernel composed of equal values, a Gaussian Filter may adopt a kernel using a Gaussian function. The values of the kernel matrix may be generated mathematically through a Gaussian function and applied. However, the preprocessing is not limited thereto, and may be performed in various methods.

The dart pin location identification network model may generate hit location information for a plurality of dart pins from a dart target photographing images including a plurality of dart pins. In this case, the control unit 100 may determine the hit location information of the last hit dart pin among the hit location information of the plurality of dart pins. Due to the nature of the dart game play, multiple dart pins may be thrown in a single round. Therefore, in order to easily determine the throw location for the corresponding dart pin, it is necessary to determine what information to be input to the dart pin location identification network model, that is, what information corresponds to the dart pin of which the current location needs to be recognized. Detailed exemplary embodiments thereof will be described below with reference to FIG. 5.

FIG. 5 is another flow diagram for illustrating the example of the dart pin hit location identification method performed by the dart game apparatus according to some exemplary embodiments of the present disclosure.

Since a dart target photographing image of a plurality of dart pins hitting a dart target does not have information about the order of the hits, the dart game apparatus of the present disclosure may identify the hit location information of the last hit dart pin by using additional information in addition to the dart target photographing image. Hereinafter, specific operations of the dart pin hit location identification method using history information will be described with reference to FIG. 5.

In some exemplary embodiments of the present disclosure, the dart pin hit location identification method may include generating first history information in response to a first dart pin throw (s1100). Here, the first history information may include at least one of a score value determined by the first dart pin throw or hit location information of the at least one dart pin hit on the dart target.

The first history information may be used to identify the order of some hits among the plurality of dart pins appearing in the dart target photographing image. For example, when the first history information is generated in response to the first dart pin throw, the first history information may be used to determine, among a plurality of hit location information, hit location information for a dart pin hit by a second dart pin throw. Here, the first dart pin throw may refer to a dart pin throw that precedes the second dart pin throw.

In some examples, the first history information may include a score value determined by the first dart pin throw. In this case, the score value determined by the first dart pin throw may be compared to the score value determined by the second dart pin throw to provide information to identify the dart pin hit by the second dart pin throw.

In some examples, the first history information may include hit location information of the dart pin that has hit the dart target. In this case, by excluding the hit location information of the dart pin that hit the dart target included in the first history information from the plurality of hit location information, the dart pin that had hit by the second dart pin throw may be identified. However, the first history information is not limited thereto, and may include a variety of information.

In some exemplary embodiments of the present disclosure, the dart pin hit location identification method may include obtaining a dart target photographing image in response to the second dart pin throw (s1200). Here, the dart target photographing image may include an image of a dart target and the plurality of dart pins that had hit the dart target.

As described in FIG. 4, the control unit 100 may recognize that the second dart pin throw has occurred by the player. In this case, the control unit 100 may control the camera unit 140 to photograph the dart target to detect the hit location of the dart pin. Since the first dart pin throw and the second dart pin throw had occurred, the dart target photographing image may include the image of the dart target and the plurality of dart pins that had hit the dart target. In this case, there may be multiple hit location information of the dart pins obtained from the dart target photographing image. In this case, the hit location information of the dart pin corresponding to the second dart pin throw may be identified using the history information, as described below. History information may be used to facilitate identification of a second dart pin throw and location information of the dart pin corresponding to the second dart pin throw. The history information may be used to determine exactly which of the plurality of dart pins that hit the dart target corresponds to the current dart pin throw (that is, the second dart pin throw), not the dart pin corresponding to the first dart pin throw.

In some exemplary embodiments of the present disclosure, the dart pin hit location identification method may include determining, by the dart pin location identification network model, hit location information of a dart pin corresponding to the second dart pin throw based on first history information and the dart target photographing image (s1300).

As described in FIG. 4, the control unit 100 may generate input data from the dart target photographing image. The input data may include a bounding box image corresponding to the dart target photographing image. For example, the control unit 100 may generate input data that includes one bounding box image obtained from one dart target image. In some examples, the dart target photographing image may include at least two images generated by at least two cameras positioned in a predetermined direction, respectively. For example, the camera unit 140 may include two or more cameras installed at various locations within the dart game device, such as left and right sides of the top of the dart game device, or left and right sides of the bottom, or front and rear of the top, or front and rear of the bottom. In this case, the control unit 100 may obtain a dart target photographing image that is photographed by a camera located on the left side of the top of the dart game apparatus in a direction facing the dart target. Hereinafter, for ease of description, the following describes the operation of the dart game device by assuming a situation where two cameras are installed on the dart game device and two images are acquired by the two cameras.

Further, the control unit 100 may obtain a dart target photographing image that is photographed by a camera located on the right side of the top of the dart game apparatus in a direction facing the dart target. However, the present disclosure is not limited thereto, and the camera position and photographing direction may vary.

For example, when two dart target photographing images are obtained, the control unit 100 may generate input data by performing a merging operation on the two dart target photographing images. Specifically, for example, the control unit 100 may obtain two bounding box images corresponding to two dart target photographing images, respectively. Here, the algorithm for obtaining the bounding box image may be a variety of object detection algorithms. In some examples, the bounding box image may be replaced with one of a variety of images for object detection. Then, the control unit 100 may merge the two bounding box images into input data that is one image. In another example, in a different order, the control unit 100 may merge two dart target photographing images into a single image. Then, the control unit 100 may obtain input data including two bounding box images from one image.

According to some exemplary embodiments of the present disclosure, the input data may include an image in which at least two bounding box images are disposed in a predetermined direction, and the at least two bounding box images may correspond to at least two images generated by at least two cameras positioned in the predetermined direction.

In some examples, the input data may be an image of at least two bounding box images disposed in a predetermined direction. For example, two dart target photographing images may be obtained by at least two cameras positioned in a predetermined direction by the second dart pin throw. In this case, the input data may be the image obtained by disposing two bounding box images obtained from the two dart target photographing images top and bottom or left to right. However, the input data is not limited thereto, and the input data may be an image that includes a bounding box image disposed according to various methods.

When the input data is generated, the dart pin location identification network model may process the input data to generate hit location information for a plurality of dart pins. As described above, the hit location information of the dart pin may include the location information of the segment hit by the dart pin. In addition, the hit location information of the dart pin may include information indicating the location of the bit within the segment hit by the dart pin.

Hereinafter, the detailed operations of the exemplary dart pin location identification network model and the control unit 100 for processing the dart target photographing image including the plurality of dart pins hit the dart target will be described.

In some exemplary embodiments of the present disclosure, the determining of the hit location information of the dart pin corresponding to the second dart pin throw based on the first history information and the dart target photographing image (s1300) may include generating the hit location information of the plurality of dart pins by processing the input data based on the dart target photographing image by the dart pin location identification network model, and determining hit location information of a dart pin corresponding to the second dart pin throw among the hit location information of the plurality of dart pins generated based on the first history information.

More specifically, as described above, the dart pin location identification network model may obtain the plurality of hit location information by processing input data associated with the dart target photographing image including the plurality of dart pins that had hit the dart target. In this case, the control unit 100 may use the first history information to determine the hit location information of the dart pin that had hit by the second dart pin throw among the plurality of hit location information. For example, when the first history information includes a score value determined by the first dart pin throw, the control unit 100 may identify a dart pin that had hit by the second dart pin throw by comparing the score value determined by the first dart pin throw to the score value determined by the second dart pin throw. For another example, the control unit 100 may identify a dart pin that had hit by the second dart pin throw by excluding the hit location information of the dart pin that had hit the dart target included in the first history information from the plurality of hit location information. However, the present disclosure is not limited thereto, and the control unit 100 may determine the hit location information of the dart pin corresponding to the second dart pin throw by using the first history information in various methods.

In some exemplary embodiments of the present disclosure, the determining of the hit location information of the dart pin corresponding to the second dart pin throw based on the first history information and the dart target photographing image (s1300) may include generating the hit location information of the dart pin corresponding to the second dart pin throw by processing the input data including the first history information by the dart pin location identification network model.

In detail, instead of obtaining the plurality of hit location information and then post-processing the obtained hit location information by using the first history information by using the dart pin location identification network model, the first history information may be input to the dart pin location identification network model in the form of discrete data. For example, when the dart pin location identification network model is a deep learning model that includes an input layer, a hidden layer, and an output layer, the first history information may be input as input data to the input layer of the dart pin location identification network model. In another example, the first history information may be entered as input data into one of the plurality of hidden layers. In this case, the dart pin location identification network model may output only the hit location information of the dart pin corresponding to the second dart pin throw among the plurality of hit location information. For another example, the dart pin location identification network model may additionally output information for identifying the hit location information of the dart pin corresponding to the second dart pin throw. However, the dart pin location identification network model is not limited thereto, and the dart pin location identification network model may process the first history information as input data in various methods.

According to some exemplary embodiments of the present disclosure, the dart pin hit location identification method may further include generating second history information in response to the second dart pin throw.

Similar to the first history information, the second history information may be used to identify the hit location information of the last hit dart pin among the plurality of dart pins appearing in the dart target photographing image. For example, when the second history information is generated in response to the second dart pin throw, the second history information may be used to determine, among a plurality of hit location information, hit location information for a dart pin hit by a third dart pin throw. Here, the third dart pin throw may refer to a dart pin throw that follows the second dart pin throw.

Same as or similar to the first history information, the second history information may include a score value determined by the first dart pin throw. Further, the second history information may include hit location information of a dart pin that hit the dart target. The second history information may be used to determine hit location information of a dart pin hit by the third dart pin throw in a manner similar to the first history information as described above. However, the second history information is not limited thereto, and may include a variety of information.

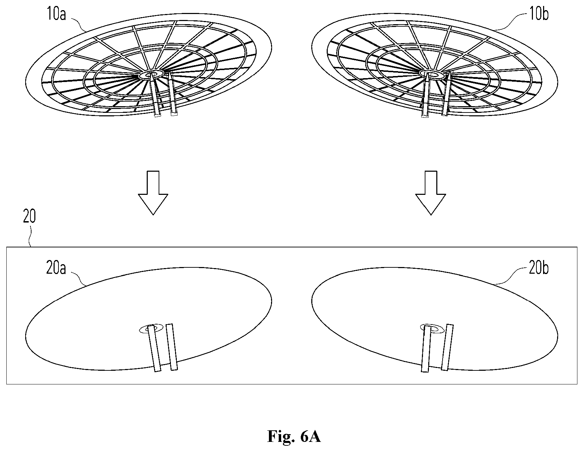

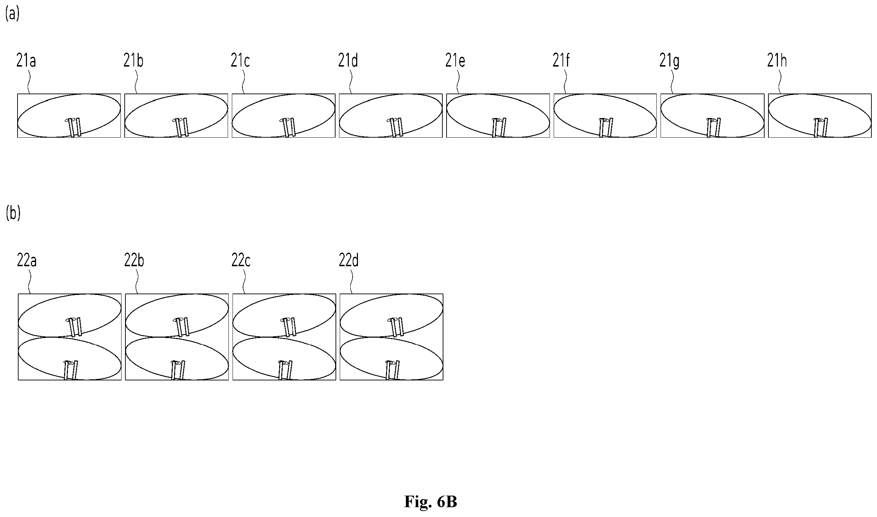

FIGS. 6A and 6B are diagrams for illustrating dart target photographed images.

As described above, a dart target photographing image 10 may include an image of a dart target and at least one dart pin that had hit the dart target. Referring to FIG. 6A, the control unit 100 may obtain a dart target photographing image 10a photographed by the camera located on the left side of the top of the dart game apparatus in response to the dart pin throw in the direction facing the dart target, and a dart target photographing image 10b photographed by the camera located on the right side of the top of the dart game apparatus in the direction facing the dart target.

In this case, the control unit 100 may generate the input data by performing a merging operation on the two dart target photographing images. Specifically, for example, the control unit 100 may obtain two bounding box images 20a and 20b corresponding to the two dart target photographing images, respectively. Here, the algorithm for obtaining the bounding box image may be a variety of object detection algorithms. In some examples, various images for object detection may also be used to replace the bounding box image. The control unit 100 may then merge the two bounding box images 20a and 20b into a single image, input data 20. For another example, the control unit 100 may merge the two dart target photographing images 10a and 10b into a single image. Then, the control unit 100 may obtain the input data 20 including the two bounding box images 20a and 20b from one image.

Referring now to FIG. 6B, eight bounding box images 21a to 21h are illustrated in (a), and input data 22a to 22d in which eight bounding box images 21a to 21h are merged into pairs corresponding to one dart pin throw are illustrated in (b). For example, when the bounding box images corresponding to the first dart pin throw are an image 21a and an image 21e, the input data in which the two bounding box images are merged may be input data 22a. Similarly, when the bounding box images corresponding to the first dart pin throw are an image 21b and an image 21f, the input data in which the two bounding box images are merged may be input data 22b.

For example, merging between images may be done based on a predetermined location of the dart target (for example, bullseye). For example, merging between images may be done based on the throw location of the dart pin within the dart target. For example, merging between images may be implemented through a horizontal merge, where two images are aligned horizontally, or a vertical merge, where two images are aligned vertically. For example, images may be merged so that two images are included within a bounding box of a predetermined size at the same scale.

The dart game device 1000 or the dart game server 3000 may obtain a plurality of images photographed from different directions for a single dart pin throw. Through the process of merging the plurality of images into a single image, the dart pin location identification network may be operated to more accurately identify the hit location of the dart pin within the dart target by receiving the one merged image including the two-dart pin location information as input.

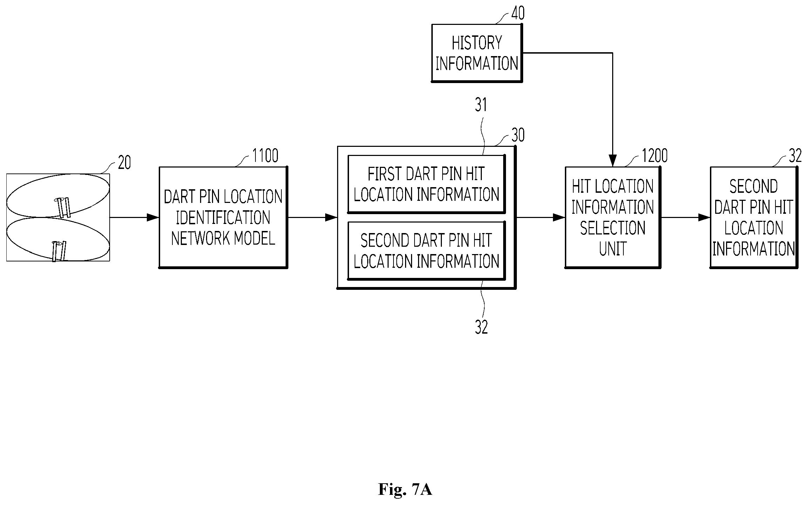

FIGS. 7A and 7B are diagrams for illustrating an operation of an exemplary dart pin location identification model 1100 according to some exemplary embodiments of the present disclosure.

Referring to FIG. 7A, the control unit 100 may determine the hit location information of the most recently thrown dart pin by obtaining a plurality of hit location information by using the dart pin location identification network model and then post-processing the obtained hit location information by using the first history information. For example, the dart pin location identification network model may process the input data 20 including an image representing two dart pins to generate hit location information 31 of the plurality of dart pins. Here, the input data may be obtained from two dart target photographing images obtained in response to the second dart pin throw occurring subsequent to the first dart pin throw. For example, the hit location information 30 of the plurality of dart pins may include first dart pin hit location information 31 corresponding to the first dart pin throw and second dart pin hit location information 32 corresponding to the second dart pin throw. In this case, a hit location information selection unit 1200 may determine hit location information 32 corresponding to the most recent throw (for example, the second dart pin throw) among the hit location information 30 of the plurality of dart pins by using history information 40.

In some examples, the history information may include various information for identifying hit location information of the last hit dart pin among the plurality of dart pins appearing in the dart target photographed image. For example, history information may include location information or score information for each dart pin thrown onto the dart target. According to the example, the currently thrown dart pin may be determined by excluding the location information of past thrown dart pins. For example, when the first history information 40 is generated in response to the first dart pin throw, the first history information may be used to determine the hit location information 32 of the dart pin that had hit by the second dart pin throw from the plurality of hit location information 30.

In some examples, the first history information 40 generated in response to the first dart pin throw may include a score value determined by the first dart pin throw. In this case, the hit location information selection unit 1200 may determine the second dart pin hit location information 32 from the plurality of hit location information 30 by comparing a score value determined by the first dart pin throw to a score value determined by the second dart pin throw.

In some examples, the first history information 40 may include hit location information of the dart pin that had hit the dart target. In this case, the hit location information selection unit 1200 may determine the second dart pin hit location information 32 by excluding the hit location information of the dart pin that had hit the dart target included in the first history information from the plurality of hit location information 30.

The hit location information selection unit 1200 may be implemented as a simple computational model, or may be implemented as a network model. However, the hit location information selection unit 1200 is not limited thereto, and the hit location information selection unit 1200 may be implemented in a variety of methods.

Referring to FIG. 7B, instead of obtaining the plurality of hit location information by using the dart pin location identification network model and then post-processing the obtained hit location information by using the first history information 40, the control unit 100 may determine the second dart pin hit location information 32 from the plurality of hit location information by inputting the first history information 40 into the dart pin location identification network model 1100 in the form of discrete data. For example, when the dart pin location identification network model 1100 is a deep learning model that includes an input layer, a hidden layer, and an output layer, the first history information 40 may be input into the input layer of the dart pin location identification network model 1100. For another example, the first history information may be entered into one of a plurality of hidden layers. In this case, the dart pin location identification network model 1100 may output only the second dart pin hit location information 32 from the plurality of hit location information, or may additionally output information capable of identifying the second dart pin hit location information 32.

FIG. 8 is a flow diagram for illustrating an example of a method of generating a training dataset for the dart pin hit location identification method performed by a computing device according to some exemplary embodiments of the present disclosure.

The dart pin location identification network model 1100 needs to be trained by using a sufficient amount of training datasets so that the dart pin location identification network model 1100 may more accurately identify the hit location of the dart pin by using the plurality of dart target photographing images corresponding to the dart pin throw. In some examples, the dart target part 200 may include a scoreboard including a bullseye and regions (segments) separated by straight lines extending radially from the bullseye, each with an individual score. Each segment may include a plurality of receiving grooves (bits or holes) into which the tip of the dart may be inserted. In this case, the hit location of the dart pin may be determined by identifying a segment location or a bit location on the segment. In particular, since there are a finite number of segments and a finite number of bits on a segment, the location of the dart pins may be specified in a finite number of methods.

The method of generating a training dataset for the dart pin location identification of the present disclosure may obtain a plurality of dart target photographing training images while changing the number of dart pins hit and the hit locations of the dart pins on the dart target part 200 that includes a scoreboard having a finite number of dart pin locations. Thus, the method of generating a training dataset for dart pin location identification of the present disclosure may generate a sufficient amount of training datasets. Further, a sufficient amount of training datasets may be generated by obtaining dart target photographing training images in various environments in which the dart game apparatus 1000 may be located. The methods of generating the training dataset for dart pin location identification of the present disclosure may be performed by a variety of computing devices, including the dart game apparatus 1000, at least one different device 2000, and the dart game server 3000.

Hereinafter, a method of generating a training dataset for training the dart pin location identification network model 1100 will be described in detail.

In some exemplary embodiments of the present disclosure, the method for generating the training dataset for dart pin location identification may include obtaining a dart target photographing training image in which at least one dart pin hit one segment of the dart target (s2100). Here, the plurality of segments included in the dart target may each include a predetermined number of bits.

As described with reference to FIGS. 4 to 7, the dart pin location identification network model 1100 may be implemented by using various image processing algorithms that may generate hit location information for dart pins from the dart target photographing image. In some examples, the dart pin location identification network model may generate hit location information for one or more dart pins by processing input data based on a plurality of dart target photographing images obtained from multiple angles. However, without limitation, the dart pin location identification network model may generate hit location information of one or more dart pins by processing input data based on one dart target photographing image. Hereinafter, the method of generating the training dataset associated with the dart pin location identification network model 1100 using the dart target photographing images including two or more images will be described. However, without limitation, the method according to the present disclosure may be applied to generate a training dataset associated with the dart pin location identification network model 1100 utilizing a single dart target photographing image.

As described above, the dart target may be divided into segments, each with its own individual score. Furthermore, each segment may have a plurality of bits (or holes, receiving grooves) that each dart pin may hit. **In** this case, the number of hit locations where the dart pin may hit may be limited to the total number of bits included in the plurality of segments. Thus, a sufficient amount of dart target photographing training images may be obtained by changing the bit location where the dart pin hit.

**In** some exemplary embodiments of the present disclosure, the obtaining of the dart target photographing training image in which at least one dart pin hit one segment of the dart target (s2100) may include obtaining a first dart target photographing training image of the first dart pin hitting a first bit included in a first segment of the dart target, and obtaining a second dart target photographing training image of the first dart pin hitting a second bit included in a first segment of the dart target.

More specifically, multiple dart target photographing training images may be obtained by changing the bit hit by the dart pin in a single segment. For example, when the first segment includes the first bit and the second bit which are different from each other, the first dart target photographing training image may be obtained by photographing the dart target hit by the first dart pin on the first bit of the first segment. Then, the second dart target photographing training image may be obtained by removing the first dart pin from the first bit of the first segment, and photographing the dart target hit by the first dart pin on the second bit of the first segment. Herein, the first dart pin may be one or more same or similar dart pins, and does not necessarily mean a single dart pin. Compared to the first dart target photographing training image, the second dart target photographing training image may be an image with different hit locations of one dart pin in one segment.

In some exemplary embodiments of the present disclosure, the obtaining of the dart target photographed training image in which at least one dart pin hits one segment or bit of the dart target (s2100) may include obtaining a third dart target photographed training image in which the first dart pin hits in a third bit included in the second segment of the dart target.

More specifically, a plurality of dart target photographed training images may be obtained by changing the location of the segment or bit hit by the dart pin. As in the example described above, the first dart target photographing training image may be obtained by photographing the dart target that has hit the first dart pin on the first bit of the first segment. Then, the third dart target photographing training image may be obtained by removing the first dart pin from the first bit of the first segment, and photographing the dart target hit by the first dart pin on the third bit of the second segment. In this case, compared to the first dart target photographing training image, the third dart target photographing training image may be an image with different hit location of one dart pin on the two segments.

In some exemplary embodiments of the present disclosure, the obtaining of the dart target photographing training image in which at least one dart pin hit one segment of the dart target (s2100) may further include obtaining a fourth dart target photographing training image in which the first dart pin hits on the first bit included in the first segment of the dart target and the second dart pin hits on the second bit included in the first segment of the dart target.

More specifically, the dart target photographing training image may be obtained for two dart pins hit on two different bits included in one segment. For example, the fourth dart target photographing training image may be obtained by photographing the dart target hit by the second dart pin on the second bit included in the first segment of the dart target in the state where the first dart pin hits the first bit included in the first segment of the dart target. In this case, the fourth dart target photographing training image may be an image with an additional hit location of one dart pin in one segment compared to the first dart target photographing training image.

In some exemplary embodiments of the present disclosure, the obtaining of the dart target photographing training image in which at least one dart pin hits in one segment of the dart target (s2100) may further include obtaining a fifth dart target photographing training image in which the first dart pin hits on the first bit included in the first segment of the dart target and the second dart pin hits on a fourth bit included in the first segment of the dart target.

More specifically, a dart target photographing training image may be obtained by moving one of two hit dart pins that had hit on two different bits included in one segment. For example, as in the example described above, the fourth dart target photographing training image may be obtained by photographing the dart target hit by the second dart pin on the second bit included in the first segment of the dart target in the state where the first dart pin hits on the first bit included in the first segment of the dart target. In this case, the fifth dart target photographing training image may be obtained by photographing a dart target in which the second dart pin hit on the second bit included in the first segment of the dart target is moved to the fourth bit included in the first segment, while the first dart pin remains as it is. In this case, the fifth dart target photographing training image may be an image in which the hit location of one of the two dart pins has changed within one segment compared to the fourth dart target photographing training image.

In some exemplary embodiments of the present disclosure, the obtaining of the dart target photographing training image in which at least one dart pin hit one segment of the dart target (s2100) may include obtaining a sixth dart target photographing training image in which the first dart pin hits on the first bit included in the first segment of the dart target and the second dart pin hits on a third bit included in the second segment of the dart target.

More specifically, a dart target photographing training image may be obtained for two dart pins hit on two different segments. In the example described above, the first dart target photographing training image may be obtained by photographing the dart target hitting the first dart pin on the first bit of the first segment. Further, the sixth dart target photographing training image may be obtained by photographing the dart target hit by the second dart pin on the third bit included in the second segment of the dart target, while the first dart pin remains on the first bit of the first segment as it is. In this case, the sixth dart target photographing training image may be an image with one additional hit location of one dart pin on a different segment compared to the first dart target photographing training image.

In some exemplary embodiments of the present disclosure, the obtaining of the dart target photographing training image in which at least one dart pin hit one segment of the dart target (s2100) may include obtaining a seventh dart target photographing training image in which the first dart pin hits on the first bit included in the first segment of the dart target and the second dart pin hits on a fifth bit included in the second segment of the dart target.

More specifically, a dart target photographing training image may be obtained by moving one of two dart pins that had hit on two different segments. In the example described above, the sixth dart target photographing training image may be obtained by photographing the dart target hit by the second dart pin on the third bit included in the second segment of the dart target, while the first dart pin remains on the first bit of the first segment as it is. In this case, a seventh dart target photographing training image may be obtained by photographing the dart target in which the second dart pin is moved to the fifth bit included in the second segment from the third bit included in the second segment of the dart target while the first dart pin remains on the first bit of the first segment as it is. In this case, the seventh dart target photographing training image may be an image in which the hit location of one dart pin in one segment is changed compared to the sixth dart target photographing training image.

According to some exemplary embodiments of the present disclosure, the obtaining of the first dart target photographing training image of the first dart pin hitting the first bit included in the first segment of the dart target may include obtaining the first dart target photographing training image under a first photographing environment condition; and obtaining the first dart target photographing training image under a second photographing environment condition.

More specifically, the surrounding environment in which the dart game apparatus 1000 is located may have a variety of environments. In this case, the training dataset may include images generated under a variety of photographing environmental conditions so that the dart pin location identification network model 1100 is better able to process images photographed in different surrounding environments.

For example, the first photographing environment condition may have relatively bright lighting. Further, the second photographing environment condition may have relatively dim lighting. By photographing without changing the hit location of the dart pin under two different conditions, multiple dart target photographing training images may be obtained that differ only in the photographing environment conditions.

In another example, the dart target photographing training image that differs only in the photographing environment conditions may be obtained by post-processing the dart target photographing training image under different conditions. For example, by adjusting the brightness of the dart target photographing training image, multiple dart target photographing training images may be obtained that differ only in the photographing environment conditions. However, the present disclosure is not limited thereto, and the dart target photographing training images may be obtained in various methods.

According to some exemplary embodiments of the present disclosure, the dart pin hit location identification method may further include assigning a label corresponding to the obtained dart target photographing training image (s2200). Here, the label may be determined based on the location of the segment hit by the dart pin. Further, the label may be determined based on the segment location and the bit location on the segment.

When the dart target photographing training image is obtained, a label corresponding to the dart target photographing training image may be assigned. For example, when the dart target photographing training image includes an image of a dart pin that hits on the first bit of the first segment, the label corresponding to the dart target photographing training image may be information indicating the first segment. In another example, the label corresponding to the dart target photographing training image may be information indicating the first segment and the bit location on the first segment. Here, labeling may be understood as the action of associating the dart target photographing training image with the corresponding label and storing dart target photographing training image and the corresponding label.. In this way, a training data set may be generated by generating multiple pairs consisting of dart target photographing training images and labels. However, the present disclosure is not limited thereto, and the label corresponding to the dart target photographing training image may be assigned in a variety of methods.

In a further example, the label corresponding to the dart target photographing training image may include a bounding box image. As a further example, the label corresponding to the dart target photographing training image may further include history information. The training dataset in which the label includes history information may be used to train the dart pin location identification network model 1100 exemplified in FIG. 7B.

According to some exemplary embodiments of the present disclosure, the dart target photographing training image may include at least two images corresponding to one label, and at least two images corresponding to one label may be generated by at least two cameras, each positioned in a predetermined direction.

As described above, the dart pin location identification network model may generate hit location information for one or more dart pins by processing input data based on a plurality of dart target photographing images obtained from multiple angles. In this case, the training dataset for training the dart pin location identification network model may include a plurality of dart target photographing images obtained from multiple angles, and one label corresponding to the plurality of dart target photographing images. For example, a plurality of dart target photographing training images obtained from multiple angles may be obtained by using at least two cameras positioned in predetermined directions. In this case, the training dataset may be suitable for a dart game apparatus including at least two cameras positioned in predetermined directions. However, the present disclosure is not limited thereto, and the dart target photographing training image may be generated in a variety of methods.

In some examples, where the dart pin location identification network model 1100 processes input images generated from two or more dart target photographing images, the first dart target photographing training image to the seventh dart target photographing training image may be two or more images, each generated by two cameras. For example, the number of dart target photographing training images may correspond to the number of cameras. **In** some examples, when the number of cameras is two, the number of dart target photographing training images may be two. As another example, the number of dart target photographing training images may be an integer multiple of the number of cameras. Specifically, for example, multiple cameras may take photographs of the dart target n time at intervals of a predetermined time. **In** this case, the number of dart target photographing training images may be n times the number of cameras. However, the present disclosure is not limited thereto, and the dart target photographing training images may be generated in any number of various methods.

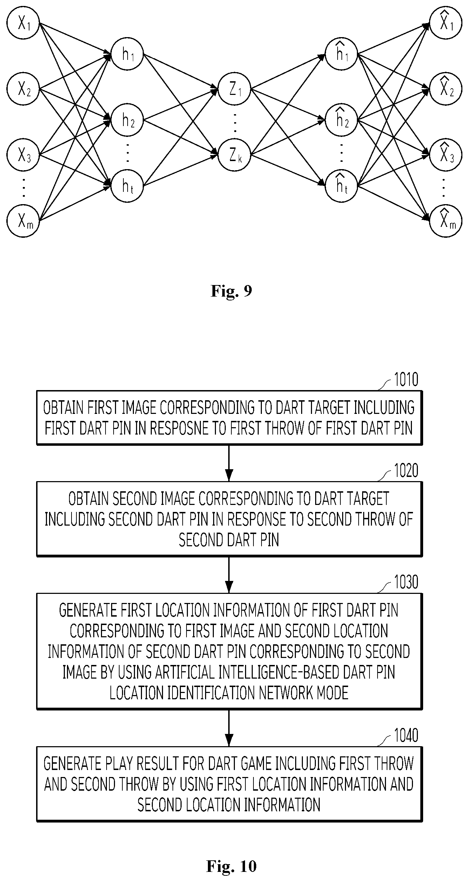

FIG. 9 is a schematic diagram illustrating an example of an artificial intelligence-based dart pin location identification network model according to some exemplary embodiments of the present disclosure.

Throughout the present specification, the dart pin location identification network model, a network model, a computational model, a nerve network, a network function, and a neural network may be used interchangeably. A neural network may consist of a set of interconnected computational units, which may generally be referred to as nodes. The "nodes" may also be called "neurons". The neural network consists of one or more nodes. The nodes (or neurons) configuring the neural network may be interconnected by one or more links.

**In** the neural network, one or more nodes connected through the links may relatively form a relationship of an input node and an output node. The concept of the input node is relative to the concept of the output node, and a predetermined node having an output node relationship with respect to one node may have an input node relationship in a relationship with another node, and a reverse relationship is also available. As described above, the relationship between the input node and the output node may be generated based on the link. One or more output nodes may be connected to one input node through a link, and a reverse case may also be valid.

In the relationship between an input node and an output node connected through one link, a value of the output node data may be determined based on data input to the input node. Herein, a link connecting the input node and the output node may have a weight. The weight is variable, and in order for the neural network to perform a desired function, the weight may be varied by a user or an algorithm. For example, when one or more input nodes are connected to one output node by links, respectively, a value of the output node may be determined based on values input to the input nodes connected to the output node and weights set in the link corresponding to each of the input nodes. As described above, in the neural network, one or more nodes are connected with each other through one or more links to form a relationship of an input node and an output node in the neural network. A characteristic of the neural network may be determined according to the number of nodes and links in the neural network, a correlation between the nodes and the links, and a value of the weight assigned to each of the links. For example, when there are two neural networks in which the numbers of nodes and links are the same and the weight values between the links are different, the two neural networks may be recognized to be different from each other.

The neural network may consist of a set of one or more nodes. A subset of the nodes configuring the neural network may form a layer. Some of the nodes configuring the neural network may form one layer based on distances from an initial input node. For example, a set of nodes having a distance of n from an initial input node may form n layers. The distance from the initial input node may be defined by the minimum number of links, which need to be passed to reach a corresponding node from the initial input node. However, the definition of the layer is arbitrary for the description, and a degree of the layer in the neural network may be defined by a different method from the foregoing method. For example, the layers of the nodes may be defined by a distance from a final output node.

The initial input node may mean one or more nodes to which data is directly input without passing through a link in a relationship with other nodes among the nodes in the neural network. Otherwise, the initial input node may mean nodes which do not have other input nodes connected through the links in a relationship between the nodes based on the link in the neural network. Similarly, the final output node may mean one or more nodes that do not have an output node in a relationship with other nodes among the nodes in the neural network. Further, the hidden node may mean nodes configuring the neural network, not the initial input node and the final output node.

In the neural network according to the exemplary embodiment of the present disclosure, the number of nodes of the input layer may be the same as the number of nodes of the output layer, and the neural network may be in the form that the number of nodes decreases and then increases again from the input layer to the hidden layer. Further, in the neural network according to another exemplary embodiment of the present disclosure, the number of nodes of the input layer may be smaller than the number of nodes of the output layer, and the neural network may be in the form that the number of nodes decreases from the input layer to the hidden layer. Further, in the neural network according to another exemplary embodiment of the present disclosure, the number of nodes of the input layer may be larger than the number of nodes of the output layer, and the neural network may be in the form that the number of nodes increases from the input layer to the hidden layer. The neural network according to another exemplary embodiment of the present disclosure may be the neural network in the form in which the foregoing neural networks are combined.

A deep neural network (DNN) may mean the neural network including a plurality of hidden layers, in addition to an input layer and an output layer. When the DNN is used, it is possible to recognize a latent structure of data. That is, the potential structure of photos, text, video image, speech, and music may be identified. For example, a DNN may recognize where an object is located in an image, what the object is in the image, what pixel information the object occupies in the image, what objects are in the photo, what the content and emotion of the writing is in the object, what the content and emotion of the speech is, and the like. The DNN may include a convolutional neural network (CNN), a recurrent neural network (RNN), an auto encoder, Generative Adversarial Networks (GAN), a restricted Boltzmann machine (RBM), a deep belief network (DBN), a Q network, a U network, a Siamese network, a transformer, and the like. The foregoing description of the deep neural network is merely illustrative, and the present disclosure is not limited thereto.

The neural network may be trained by at least one scheme of supervised learning, unsupervised learning, semi-supervised learning, and reinforcement learning. The training of the neural network may be a process of applying knowledge for the neural network to perform a specific operation to the neural network.

The neural network may be trained in a direction of minimizing an error of an output. In the training of the neural network, training data is repeatedly input to the neural network and an error of an output of the neural network for the training data and a target is calculated, and the error of the neural network is back-propagated in a direction from an output layer to an input layer of the neural network in order to decrease the error, and a weight of each node of the neural network is updated. **In** the case of the supervised learning, training data labelled with a correct answer (that is, labelled training data) is used, in each training data, and in the case of the unsupervised learning, a correct answer may not be labelled to each training data. That is, for example, the training data in the supervised learning for data classification may be data, in which category is labelled to each of the training data. The labelled training data is input to the neural network and the output (category) of the neural network is compared with the label of the training data to calculate an error. For another example, in the case of the unsupervised learning related to the data classification, training data that is the input is compared with an output of the neural network, so that an error may be calculated. The calculated error is back-propagated in a reverse direction (that is, the direction from the output layer to the input layer) in the neural network, and a connection weight of each of the nodes of the layers of the neural network may be updated according to the backpropagation. A change amount of the updated connection weight of each node may be determined according to a learning rate. The calculation of the neural network for the input data and the backpropagation of the error may configure a learning epoch. The learning rate is differently applicable according to the number of times of repetition of the learning epoch of the neural network. For example, at the initial stage of the learning of the neural network, a high learning rate is used to make the neural network rapidly secure performance of a predetermined level and improve efficiency, and at the latter stage of the learning, a low learning rate is used to improve accuracy.

According to one exemplary embodiment of the present disclosure, in order to increase the amount of training data for training a neural network, various data augmentation methods may be used. For example, data augmentation may be performed through two-dimensional transformations such as rotation, scale, shearing, reflection, and translation. In addition, data augmentation may be performed by utilizing noise insertion, color, brightness transformation, and the like.

In the training of the neural network, the training data may be generally a subset of actual data (that is, data to be processed by using the trained neural network), and thus an error for the training data is decreased, but there may exist a learning epoch, in which an error for the actual data is increased. Overfitting is a phenomenon, in which the neural network excessively learns training data, so that an error for actual data is increased. Overfitting may act as a reason of increasing an error of a machine learning algorithm. In order to prevent overfitting, various optimizing methods may be used. In order to prevent overfitting, a method of increasing training data, a regularization method, a dropout method of inactivating a part of nodes of the network during the training process, a method using a bath normalization layer, and the like may be applied.

FIG. 10 is a diagram illustrating an example of a method of providing a dart game by using artificial intelligence technology according to some exemplary embodiments of the present disclosure.

The method of FIG. 10 may be implemented by at least one of the dart game devices 1000 or the dart game server 3000. Alternatively, the method of FIG. 10 may also be implemented by interaction of the dart game device 1000 and the dart game server 3000. Hereinafter, for ease of description, the present disclosure will be described based on the case where the dart game device 1000 performs the method of FIG. 10 as an example.

As illustrated in FIG. 10, the dart game device 1000 may obtain a first image corresponding to a dart target including a first dart pin in response to a first throw of the first dart pin (1010).

In the exemplary embodiment, when the first dart pin reaches the dart target, the dart game device 1000 may obtain a first image of the first dart pin reaching the dart target. In the exemplary embodiment, when the dart game device 1000 detects that the first dart pin has reached the dart target, or that a user has thrown the first dart pin, the dart game device 1000 may generate a plurality of images of the first dart pin hitting the dart target through a plurality of cameras for obtaining images of the same object from different angles.

The dart game device 1000 may obtain a second image corresponding to the dart target including a second dart pin in response to a second throw of the second dart pin (1020).

In the exemplary embodiment, when the second dart pin reaches the dart target, the dart game device 1000 may obtain a second image of the second dart pin reaching the dart target. In the exemplary embodiment, when the dart game device 1000 detects that the second dart pin has reached the dart target, or that a user has thrown the second dart pin, the dart game device 1000 may generate a plurality of images of the second dart pin hitting the dart target through the plurality of cameras for obtaining images of the same object from different angles.

In one exemplary embodiment, the first image and the second image may be acquired by a camera unit connected to the dart game device 1000. The first image may include a first-1 image and a first-2 image of the dart target hit by the first dart pin, photographed from different directions in response to the first throw of the first dart pin. The second image may include a second-1 image and a second-2 image of the dart target hit by the second dart pin, photographed from different directions in response to the second throw of the second dart pin.

The dart game device 1000 may generate first location information of the first dart pin corresponding to the first image and second location information of the second dart pin corresponding to the second image by using an artificial intelligence-based dart pin location identification network model (1030).

The generation of the location information of the dart game device 1000 will be briefly described here to avoid duplication with the aforementioned description. The dart game device 1000 may obtain first location information by inputting the first image to an artificial intelligence-based dart pin location identification network model, such as CNN, for image processing, and may obtain second location information by inputting the second image to the dart pin location identification network model. The dart game device 1000 may generate first input data by performing a merging operation on the first-1 image and the first-2 image of the dart target hit by the first dart pin photographed in different directions, and generate second input data by performing a merging operation on the second-1 image and the second-2 image of the dart target hit by the second dart pin photographed in different directions. By generating multiple images of a single dart pin throw from different angles and merging the images, the accuracy of the output of the dart pin location identification network may be increased.

The dart pin location identification network model may perform object detection to identify dart pins within the input data and/or output which bit within the dart target hit by the dart pin within the input data.

For example, the dart pin location identification network model may organize classes by bits within the dart target. In the example, the dart pin location identification network model may output a score for which a recognized dart pin corresponds to a class corresponding to a specific bit. For example, score information may be generated for each class corresponding to each of a plurality of bits contained in each of a plurality of segments within the dart target. Based on the score information for each of the classes, the dart pin location identification network model may determine which bit hit by the dart pin in the dart target.

For example, the dart pin location identification network model may segment, localize, detect, and/or classify a plurality of objects in an image. If a plurality of objects is detected in the input image, the dart pin location identification network model may determine which object corresponds to the currently thrown dart pin (that is, the dart pin that is subject to location identification) by using history information. The dart pin location identification network model may determine which bit within the dart target the dart pin has located on by using pixel information corresponding to a location of a dart tip on the object corresponding to the currently thrown dart pin.

For example, the dart pin location identification network model may generate a bounding box or an anchor box with a predefined shape based on the K-means algorithm. The dart pin location identification network model may determine the size information of the bounding box or anchor box corresponding to the dart target and/or the size information of the bounding box or anchor box corresponding to the dart pin in advance. Thus, the dart pin location identification network model may detect dart pins within a dart target by using predefined size boxes.

In the exemplary embodiment, the dart pin location identification network model may operate based on, for example, a YOLO algorithm. For example, the dart pin location identification network model may be operated based on a two-stage object detection algorithm, such as Faster RCNN.

The dart game device 1000 may generate a play result for the dart game including the first throw and the second throw by using the first location information and the second location information (1040).

In the exemplary embodiment, the dart game device 1000 may compare the first location information corresponding to the first throw and the second location information corresponding to the second throw to determine which of the first dart pin and the second dart pin hit a location close to a predetermined point in the dart target. For example, the first throw may be performed by a first player and the second throw may be performed by a second player. By determining the locations of the dart pins thrown by the two players and comparing the locations of the dart pins, the dart game device 1000 may determine which player hits a location close to the center portion of the dart target. Accordingly, the dart game device 1000 may provide a player who hits the location close to the center of the dart target with an opportunity to throw a dart pin first in a subsequent game (for example, 301 game, 501 game, cricket game, and area game). Accordingly, a player who will be the first to throw in the dart game may be clearly determined. That is, the dart game device 1000 may compare the first location information corresponding to the first throw with the second location information corresponding to the second throw, and generate a play result indicating that priority is given to the player who throws the dart pin that hits a location closer to the center point of the dart target between the first dart pin and the second dart pin.

In the exemplary embodiment, the dart game device 1000 may compare the first location information corresponding to the first throw and the second location information corresponding to the second throw to determine which of the first dart pin and the second dart pin hit a location close to the center point of the dart target, and output a play image displayed on one dart target together with the first location information of the first dart pin and the second location information of the second dart pin.

In the exemplary embodiment, based on the first location information of the first dart pin and the second location information of the second dart pin, a region to be represented in the center portion of the play image may be dynamically determined from among a plurality of regions included in the one dart target. The play image may include a video image reproducing the location hit by the dart pin within the dart target from multiple angles through the display unit of the dart game device 1000. Accordingly, the dart game device 1000 may provide the user with information that enables the user to clearly determine which of the two dart pins has reached a location close to a specific location on the dart target.

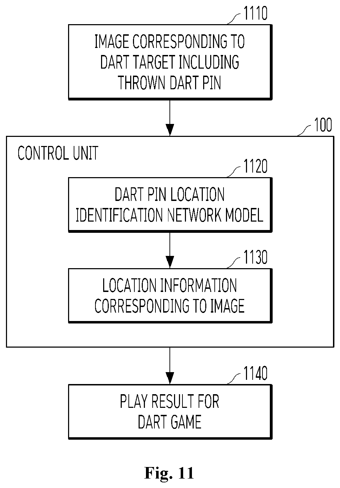

FIG. 11 is a diagram illustrating an example of an operation of the artificial intelligence-based dart pin location identification network model according to some exemplary embodiments of the present disclosure.

The dart game device 1000 may obtain an image 1110 corresponding to a dart target including the thrown dart pin. The image may include a plurality of images photographed from different angles, locations, directions, or orientations.

The control unit 100 of the dart game device 1000 may generate location information 1130 corresponding to the input image 1110 by using the dart pin location identification network model 1120. The location information 1130 may include coordinate information, bit information, and/or pixel information indicative of where the dart pin is located within the dart target. In an additional exemplary embodiment, the location information 1130 may include information about a location reached by the dart pin from a specific location of the dart target (for example, the location of the center portion of the dart target) converted to a distance in a particular unit.

In the exemplary embodiment, the dart pin location identification network model 1120 may perform an operation to classify what an object is in the input image, an operation to determine a location (localize) of an object in the input image, an object detecting operation to classify the location and type of object in the input image, and/or a segmentation operation to segment an object in the input image on a pixel-by-pixel basis.

In the exemplary embodiment, the dart pin location identification network model 1120 may correspond to an artificial intelligence-based image processing model pre-trained by a training dataset labeled with location information in the unit of bit of the dart pin hitting the dart target. In the example, the dart pin location identification network model 1120 may recognize the location of the dart tip portion of the dart pin within the image (for example, coordinate information and/or pixel information of the dart tip) as the hit location of the dart pin within the dart target. In the example, the dart pin location identification network model 1120 may also perform an artificial intelligence-based object classification function that is capable of separately recognizing a dart target, a dart pin, a dart tip, a dart body, and/or a dart wing within an image. In the exemplary embodiment, the dart pin location identification network model 1120 may perform a segmentation function to recognize classes on a pixel-by-pixel basis within an image. Accordingly, the dart pin location identification network model 1120 may obtain pixel-by-pixel information about the bit in the dart target where the dart pin hits and may determine the location where the dart pin has reached with the pixel-by-pixel information.

In the exemplary embodiment, each of first input data and second input data used in training the dart pin location identification network model 1120 may include at least two bounding box images corresponding to at least two dart target photographed images. A bounding box image may be a type of image in which a specific region is captured within the captured image (for example, a region representing the location where the dart pin has reached, and a region for the dart target). Further, each of the first input data and the second input data may include an image in which the at least two bounding box images are arranged in predetermined directions. The image arranged in the predetermined direction may refer to an image that has been rotated, enlarged, reduced, horizontally moved, and/or vertically moved in a vertical, horizontal, or diagonal direction in the form that is easier for the dart pin location identification network model 1120 to recognize.

In the exemplary embodiment, the dart pin location identification network model 1120 may be pre-trained by using a training dataset including training image data including at least two images photographed from different directions of the dart target hit by the dart pin, and label data including hit location information of the dart pin corresponding to the training image data. The label data may include at least one of segment location information corresponding to a segment of the dart target, location information representing a coordinate within the dart target, location information representing a location of a pixel in the image of the dart target, or bit location information representing location information of a bit within the segment of the dart target.

In the exemplary embodiment, the label data may include history information to identify a dart pin that is the subject of training within at least two photographed images of the dart target hit by the plurality of dart pins. Herein, the history information may include at least one of a score value determined based on the throw of the dart pin or location information of the dart pin determined based on the throw of the dart pin. The history information may be used for purposes of distinguishing between the dart pin corresponding to a current dart pin throw and the dart pins corresponding to past dart pin throws and may include information for identifying past dart pin throws. The dart pin location identification network model 1120 may determine, from the history information included in the label data, the dart pin to be excluded from the training process, from the plurality of dart pins.

The dart game device 1000 may generate a play result 1140 for the dart game based on the location information 1130 corresponding to the image.

In the exemplary embodiment, the play result 1140 may include a video image representing an image before and an image after the first dart pin reaches the dart target, and representing an image before and an image after the second dart pin reaches the dart target in the state where the first dart pin has hit according to the second throw of the second dart pin.

In the exemplary embodiment, the play result 1140 may include information identifying which of the plurality of dart pins is closer to a specific location and which is further away from the specific location. In the exemplary embodiment, the play result 1140 may include information indicating which of the plurality of players who threw the dart pins won by throwing the dart pin to a location close to a specific location on the dart target.

In the exemplary embodiment, the play result 1140 may include an image in the form of displaying a segment of the dart target hit by the dart pin, separated from other segments of the dart target. For example, an image may be displayed on the display unit 120 of the dart game device 1000 in which the segment in which the dart pin has hit protrudes forward relative to other segments. For example, a video image in which the segment hit by the dart pin protrudes from a second location, which is the location protruding from the first location that is the same location as the other segments, may be output on the display unit 120.

In the exemplary embodiment, the image included in the play result 1140 may be varied based on the hit location information of the dart pins. The image included in the play result 1140 may be enlarged based on the location where the dart pin reached.

In the exemplary embodiment, the play image may include a highlighted indication for comparing, based on the first location information of the first dart pin and the second location information of the second dart pin, a first distance from a predetermined point of the one dart target to the first location reached by the first dart pin and a second distance to the second location reached by the second dart pin. The highlighted indication may include, for example, a first indication in the form of an enlargement of the regions reached by the dart pins, a second indication in the form of a separate line representing the distance from a predetermined point to the dart pins, a third indication in the form of a number representing the distance from the predetermined point to the dart pin, and/or a fourth indication in the form of a three-dimensional rotation and output of the regions reached by the dart pins at a predetermined angle.

In the exemplary embodiment, the play image may include at least one of an image of a user throwing a dart pin, an image of the dart pin hitting the dart target, an enlarged image of the dart target to visibly show a bit of the dart pin hitting the dart target, and/or an image that indicates which dart pin has reached a close location from a specific location.

In the exemplary embodiment, the play image may include an image photographed by a camera, an image generated by a virtual animation, and/or a combination thereof. As an example of a combination thereof, the image of the user throwing the dart pin may correspond to an image photographed by the camera of the dart game device 1000, and the image visually showing the bit of the dart pin hitting the dart target may correspond to the image generated by the animation, and the dart game device 1000 may generate a play image by synthesizing these two types of images, or may output the two types of images separately from each other in the display unit.

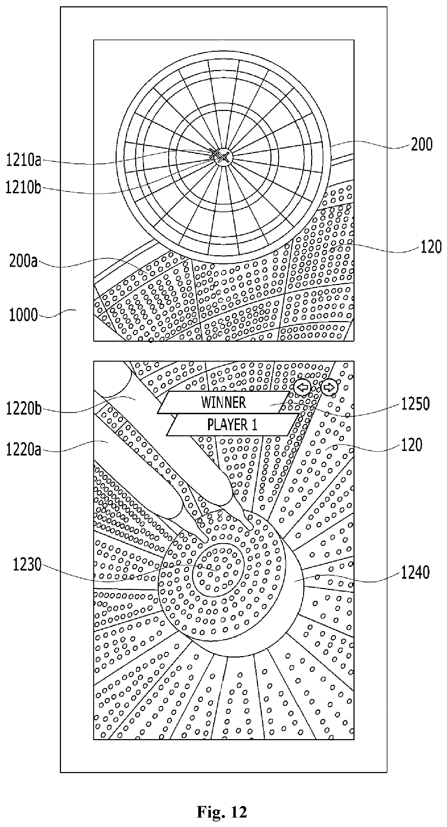

FIG. 12 is a diagram illustrating an example of an operation for providing a dart game by using artificial intelligence technology according to some exemplary embodiments of the present disclosure.

FIG. 12 illustrates an example of an operation of the dart game device 1000 that shows a dart pin that has hit the location close to a predetermined location between two dart pins.

As illustrated in FIG. 12, two dart pins 1210a and 1210b may hit the dart target 200 of the dart game device 1000.

When the dart game device 1000 detects that the two dart pins have hit, the dart game device 1000 may output play result information indicating the hit locations of the two dart pins 1210a and 1210b in the dart target 200 through the display unit 120 surrounding the outer periphery of the dart target 200 and formed on the front of the dart game device 1000.

The play result information may be generated based on location information of dart pins output from the dart pin location identification network model of the dart game device 1000.

In the exemplary embodiment, the play result for the dart game may include a play result that gives priority to the player who throws the dart pin hitting a location close to the center point of the dart target 200 between the first dart pin 1210a and the second dart pin 1210b by comparing the first location information corresponding to the first throw with the second location information corresponding to the second throw.

In the example of FIG. 12, it is illustrated that the dart pins 1210a and 1220a thrown by player 1 hit location closer to the center portion 1230 compared to the dart pins 1210b and 1220b thrown by player 2. Accordingly, in order to visibly show the location information of the dart pins 1210a and 1220a thrown by player 1 and the dart pins 1210b and 1220b thrown by player 2, the dart game device 1000 may generate a dart target object 200a that enlarges the shape of the dart target 200 through the display unit 120 to more clearly output the location information of the two dart pins 1210a and 1210b to the user. For example, in order to visually show which bits on the dart target object 200a have been hit by the dart pin objects 1220a and 1220b, the display unit 120 may output a highlighted indication on the bit hit by the dart pin to distinguish the bit hit by the dart pin from the bit not hit by the dart pin. For example, in order to visually show the hit location of the dart pins, the display unit 120 may also output an image by highlighting the dart tip portions of the dart pin objects 1220a and 1220b.

In the example of FIG. 12, it can be visually confirmed that a first dart pin object 1220a output in response to the first dart pin 1210a is located closer to the center portion 1230 of the dart target object 200a corresponding to the dart target 200 by a difference of one bit compared to the second dart pin object 1220b output in response to the second dart pin 1210b relative to the center portion 1230. As described above, the method and the device for providing the dart game in accordance with one exemplary embodiment of the present disclosure may more accurately determine the location of the dart pin by using artificial intelligence technology (for example, computer vision technology based on artificial intelligence) compared to the existing dart game device that must recognize the same location in the unit of the segment (for example, 1240).

For ease of description, in the exemplary embodiments of the present disclosure, the center location 1230 of the dart target 200 is referred to as an example of the specific location. Depending on the implementation form, a method of identifying a dart pin close to the point located at the outermost side of the dart target 200 between two dart pins may also be available. In another implementation form, a method of determining a dart pin far from the specific location of the dart target 200 among the plurality of dart pins may also be available.

In the exemplary embodiment, the dart target object 200a and/or dart pin objects 1220a and 1220b output through the display unit 120 may be variable based on the shape and/or color of the actually photographed dart pin. For example, when the dart tip of the actually thrown dart pin is black, the dart tip of the dart pin object output via the display unit 120 may be shown as a black dart tip based on the color information photographed by the camera. In another example, when the wing of the actually thrown dart pin is red, the wing of the dart pin in the dart pin object output via the display unit 120 may be shown to be red based on the color information photographed by the camera.

In the exemplary embodiment, the dart game device 1000 may obtain pre-stored shape and/or color information for a dart pin, and text or figure information displayed on the dart pin, in response to the user identification information obtained through the login. The dart game device 1000 may generate an image in the form in which the dart pin object corresponding to the dart pin of the pre-stored corresponding user reaches the dart target object, in response to the throw of the dart pin by the corresponding user.

In the exemplary embodiment, the display unit 120 may include an upper display unit covering an outer peripheral surface of the dart target 200 and a lower display unit located below the upper display unit. In the exemplary embodiment, the upper display unit and the lower display unit may output different images. For example, the upper display may display a score corresponding to the segment on the outer peripheral surface of the dart target 200 and may output the score of the dart pin and an entertainment image thereof in response to the hit of the dart pin. The lower display unit may then output an image of the photographed player throwing the dart pins and an image of the thrown dart pin objects 1210a and 1210b reaching the dart target object 200a. In the exemplary embodiment, the upper display unit and the lower display unit may interact with each other to display a single image together. As illustrated in FIG. 12, the dart target object 200a, which includes two dart pin objects 1220a and 1220b, may be rotated and enlarged in three dimensions and output on both the upper display unit and the lower display unit. Accordingly, a portion of the dart target object 200a including the two dart pin objects 1220a and 1220b may be output from the upper display unit and the remaining portion of the dart target object 200a including the two dart pin objects 1220a and 1220b may be output from the lower display unit. Depending on the size of the object output from the display unit 120, the two display units may interact with each other.

In the exemplary embodiment, the play image output from the display unit 120 may highlighted at least one segment 1240 in the dart target object 120 corresponding to the first location information of the first dart pin and the second location information of the second dart pin, compared to other segments in the dart target object 120, in order to compare the first distance from the predetermined point on one dart target to the first location reached by the first dart pin and with the second distance from the predetermined point on one dart target to the second location reached by the second dart pin. Examples of the highlight method may include protruding, separation, and/or enlargement. In the example of FIG. 12, the segment 1240 where the dart pins 1210a and 1210b hit is displayed while protruding compared to other segments within the dart target object 200a. In another example, when two dart pins each hit different segments, the plurality of segments hit by the dart pins may be highlighted and displayed compared to other segments not hit by the dart pins.

In the exemplary embodiment, the display unit 120 may output a play image in which the first dart pin object 1220a representing the first location information of the first dart pin 1210a and the second dart pin object 1220b representing the second location information of the second dart pin 1210b are displayed together in one dart target object 200a.

In the exemplary embodiment, the dart game device 1000 may dynamically determine, based on the first location information of the first dart pin 1210a and the second location information of the second dart pin 1210b, a region to be represented in the center portion of the play image among the plurality of regions included in the dart target object 200a. In the example of FIG. 12, the dart game device 1000 may control the portion (or the segment 1240) of the dart target object 200a hit by the dart pin objects to be displayed in the center region of the display unit 120. The dart game device 1000 may generate an image in which the dart target object 200a is rotated and/or enlarged based on the segment 1240 portion of the dart target object 200a. Accordingly, the image may be output that allows the user to easily check the hit locations of the dart pins and the comparison of the distances from the center from various angles.

In the exemplary embodiment, the dart game device 1000 may generate an image including an image before and an image after the first dart pin 1210a reaches the dart target 200, and output a video image representing an image before and an image after the second dart pin 1210b reaches the dart target 200 in the state where the first dart pin 1210a has hit according to the second throw of the second dart pin 1210b. The dart game device 1000 may generate one video image by combining an image of a user throwing a dart pin, an image of a dart pin flying to the dart target, and an image of the dart pin reaching the dart target by the plurality of cameras. The dart game device 1000 may generate one video image in response to the dart pin throw, in the form of synthesizing the photographed image of the user throwing the dart pin, the pre-stored moving image of the dart pin, and the pre-stored hit image of the dart pin hitting the dart target.

In the exemplary embodiment, the dart game device 1000 may generate a highlighted indication for comparing, based on the first location information of the first dart pin and the second location information of the second dart pin, a first distance from a predetermined point 1230 of the one dart target object 200a to the first location reached by the first dart pin and a second distance to the second location reached by the second dart pin. The highlighted indication may include, for example, a line segment connecting the location of the dart pin object from the predetermined point 1230 with a straight line of a predefined color. The highlighted indication may include, for example, indicating a distance between the dart pin objects from the predetermined point 1230 in the form of text and/or a figure.

In the exemplary embodiment, the dart game device 1000 may obtain a first image corresponding to the dart target including the first dart pin in response to the first throw of the first dart pin, a second image corresponding to the dart target including the second dart pin in response to the second throw of the second dart pin, and a third image corresponding to the dart target including the third dart pin in response to the third throw of the third dart pin. The dart game device 1000 may generate first location information of the first dart pin corresponding to the first image, second location information of the second dart pin corresponding to the second image, and third location information of the third dart pin corresponding to the third image by using the artificial intelligence-based dart pin location identification network model. The dart game device 1000 may generate area information corresponding to the first throw, the second throw, and the third throw at the dart target by using the first location information, the second location information, and the third location information. Based on the area information, the dart game device 1000 may generate a play result for the dart game.

In the exemplary embodiment, the dart game device 1000 may generate a figure (for example, a triangle) connecting the three hit points for the dart pins within the dart target object 200a in response to the three dart pin throws. The area within the figure may be generated based on the reach location of each of the dart pins. For example, the dart pin location identification network model of the dart game device 1000 may generate location information (for example, coordinate values, bit values, and/or pixel values) for each of the reach locations of the three dart pins. The dart game device 1000 may calculate the area of the triangle corresponding to the three dart pin throws by using the location information. Accordingly, the dart game device 1000 may control the player to throw in the next round to play the dart game based on the area of the corresponding triangle. For example, the dart pin location identification network model of the dart game device 1000 may determine a hit location of the second player's dart pin on the dart target and determine whether the second player's dart pin was thrown within a first area generated as a result of a previous dart pin throw of the first player. The dart pin location identification network model of the dart game device 1000 may determine whether the dart pin of the second player has been thrown within the first area by comparing the area of the generated triangle with the location information where a subsequent dart pin of the second player hit. Accordingly, the dart game in the form of providing a penalty or weighting when the subsequent dart pin throw of the second player is included within the triangular area, and/or the dart game in the form of providing a penalty or weighting when the subsequent dart pin throw of the second player is not included within the triangular area may be provide based on the more accurate location calculating method.

In the exemplary embodiment, the dart game device 1000 may include a lighting unit in the form of surrounding the outer peripheral surface of the dart target 200. The lighting unit may be used to reduce errors in brightness around the dart target. Accordingly, the quality of the image of the dart target photographed through the camera of the dart game device 1000 may be improved, which may improve the performance of the dart pin location identification network model in estimating the location of the dart pin within the dart target.

In the exemplary embodiment, the dart game device 1000 may determine which dart pin is closer to the center between the two dart pins and which player will throw first in the next dart game through the location identification for the two dart pin throws to more accurately and efficiently proceed with the dart game. When it is determined to proceed with the next dart game, a score for each segment of the dart target 200 may be output on an extended portion of the outer peripheral surface of the dart target 200 on the display unit 120. That is, the dart target is not labeled with a score for each segment, and a score corresponding to the corresponding segment may be displayed at one location on the extended line in the direction in which a specific segment of the dart target 200 faces on the display unit 120 surrounding the dart target 200. The display of the scores may be accomplished by sequentially displaying the corresponding scores on the outer peripheral surface. For example, clockwise from 12 o'clock, the scores may be displayed sequentially in the order 20, 1, 18, and 4. For example, counterclockwise from 12 o'clock, the scores may be displayed sequentially in the following order: 20, 5, 12, 9, 14, and 11.

In the exemplary embodiment, the dart game device 1000 may generate and display, prior to the first throw and the second throw by the first player and the second player, respectively, a score that quantitatively indicates a player's record in a dart game (for example, cork or diddle game) in which the players are sequenced, a history of wins and losses, a winning percentage, an average hit location, a probability of hitting a specific region, and/or a proximity to the center point. In such exemplary embodiments, the dart game device 1000 may display, for example, predetermined regions or points on the dart target object 200a that have the highest probability of being hit based on the dart pin throw of the specific user in the highlighted form compared to other regions or points on the dart target object 200a.

In FIG. 12, for ease of description and illustration, only a plurality of segments are illustrated on the dart target 200 and the plurality of bits within the segments are omitted, and a plurality of bit objects are illustrated on the dart target object 200a to represent the shape of the dart pin hitting the dart target 200.

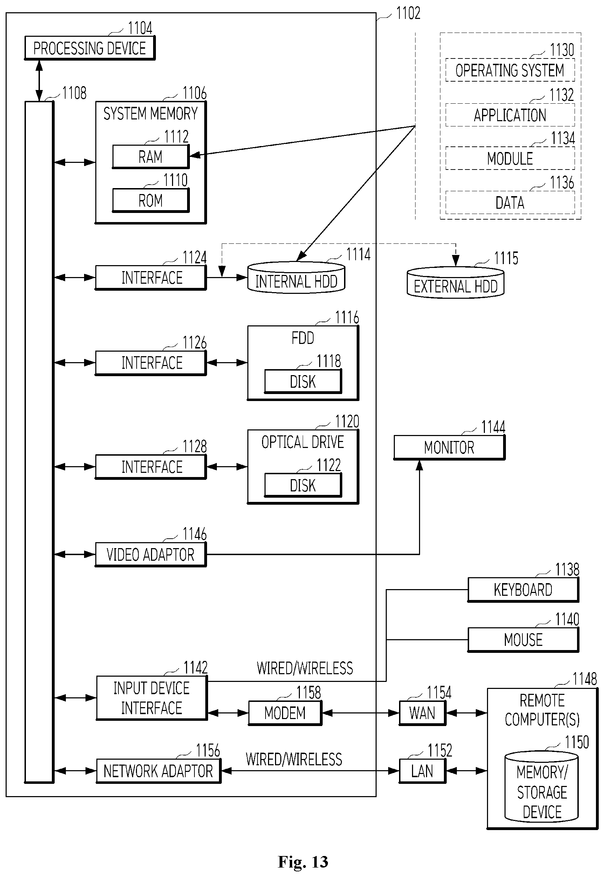

FIG. 13 is a brief, generalized schematic diagram illustrating an example of a computing environment of a dart game device and/or dart server in which exemplary embodiments of the present disclosure may be implemented.

While the present disclosure has been described as generally being implemented by a computing device corresponding to the dart game device 1000 or the dart server 3000, those skilled in the art will appreciate that the present disclosure may be implemented in combination with computer executable instructions and/or other program modules that may be executed on one or more computers, and/or as a combination of hardware and software.

In general, a program module includes a routine, a program, a component, a data structure, and the like performing a specific task or implementing a specific abstract data form. Further, those skilled in the art will appreciate well that the method of the present disclosure may be carried out by a personal computer, a hand-held computing device, a microprocessor-based or programmable home appliance (each of which may be connected with one or more relevant devices and be operated), and other computer system configurations, as well as a single-processor or multiprocessor computer system, a mini computer, and a main frame computer.

The exemplary embodiments of the present disclosure may be carried out in a distribution computing environment, in which certain tasks are performed by remote processing devices connected through a communication network. In the distribution computing environment, a program module may be located in both a local memory storage device and a remote memory storage device.

The computer generally includes various computer readable media. The computer accessible medium may be any type of computer readable medium, and the computer readable medium includes volatile and non-volatile media, transitory and non-transitory media, and portable and non-portable media. As a non-limited example, the computer readable medium may include a computer readable storage medium and a computer readable transmission medium. The computer readable storage medium includes volatile and non-volatile media, transitory and non-transitory media, and portable and non-portable media constructed by a predetermined method or technology, which stores information, such as a computer readable command, a data structure, a program module, or other data. The computer readable storage medium includes a RAM, a Read Only Memory (ROM), an Electrically Erasable and Programmable ROM (EEPROM), a flash memory, or other memory technologies, a Compact Disc (CD)-ROM, a Digital Video Disk (DVD), or other optical disk storage devices, a magnetic cassette, a magnetic tape, a magnetic disk storage device, or other magnetic storage device, or other predetermined media, which are accessible by a computer and are used for storing desired information, but is not limited thereto.

The computer readable transport medium generally implements a computer readable command, a data structure, a program module, or other data in a modulated data signal, such as a carrier wave or other transport mechanisms, and includes all of the information transport media. The modulated data signal means a signal, of which one or more of the characteristics are set or changed so as to encode information within the signal. As a non-limited example, the computer readable transport medium includes a wired medium, such as a wired network or a direct-wired connection, and a wireless medium, such as sound, Radio Frequency (RF), infrared rays, and other wireless media. A combination of the predetermined media among the foregoing media is also included in a range of the computer readable transport medium.

An illustrative environment 4100 including a computer 4102 and implementing several aspects of the present disclosure is illustrated, and the computer 4102 includes a processing device 4104, a system memory 4106, and a system bus 4108. The system bus 4108 connects system components including the system memory 4106 (not limited) to the processing device 4104. The processing device 4104 may be a predetermined processor among various commonly used processors. A dual processor and other multiprocessor architectures may also be used as the processing device 4104.

The system bus 4108 may be a predetermined one among several types of bus structure, which may be additionally connectable to a local bus using a predetermined one among a memory bus, a peripheral device bus, and various common bus architectures. The system memory 4106 includes a ROM 4110, and a RAM 4112. A basic input/output system (BIOS) is stored in a non-volatile memory 4110, such as a ROM, an erasable and programmable ROM (EPROM), and an EEPROM, and the BIOS includes a basic routine helping a transport of information among the constituent elements within the computer 4102 at a time, such as starting. The RAM 4112 may also include a high-rate RAM, such as a static RAM, for caching data.

The computer 4102 also includes an embedded hard disk drive (HDD) 4114 (for example, enhanced integrated drive electronics (EIDE) and serial advanced technology attachment (SATA)) - the embedded HDD 4114 being configured for exterior mounted usage within a proper chassis (not illustrated) - a magnetic floppy disk drive (FDD) 4116 (for example, which is for reading data from a portable diskette 4118 or recording data in the portable diskette 4118), and an optical disk drive 4120 (for example, which is for reading a CD-ROM disk 4122, or reading data from other high-capacity optical media, such as a DVD, or recording data in the high-capacity optical media). A hard disk drive 4114, a magnetic disk drive 4116, and an optical disk drive 4120 may be connected to a system bus 4108 by a hard disk drive interface 4124, a magnetic disk drive interface 4126, and an optical drive interface 4128, respectively. An interface 4124 for implementing an exterior mounted drive includes, for example, at least one of or both a universal serial bus (USB) and the Institute of Electrical and Electronics Engineers (IEEE) 1394 interface technology.

The drives and the computer readable media associated with the drives provide non-volatile storage of data, data structures, computer executable commands, and the like. In the case of the computer 4102, the drive and the medium correspond to the storage of random data in an appropriate digital form. In the description of the computer readable media, the HDD, the portable magnetic disk, and the portable optical media, such as a CD, or a DVD, are mentioned, but those skilled in the art will well appreciate that other types of computer readable media, such as a zip drive, a magnetic cassette, a flash memory card, and a cartridge, may also be used in the illustrative operation environment, and the predetermined medium may include computer executable commands for performing the methods of the present disclosure.

A plurality of program modules including an operation system 4130, one or more application programs 4132, other program modules 4134, and program data 4136 may be stored in the drive and the RAM 4112. An entirety or a part of the operation system, the application, the module, and/or data may also be cached in the RAM 4112. It will be well appreciated that the present disclosure may be implemented by several commercially usable operation systems or a combination of operation systems.

A user may input a command and information to the computer 4102 through one or more wired/wireless input devices, for example, a keyboard 4138 and a pointing device, such as a mouse 4140. Other input devices (not illustrated) may be a microphone, an IR remote controller, a joystick, a game pad, a stylus pen, a touch screen, and the like. The foregoing and other input devices are frequently connected to the processing device 4104 through an input device interface 4142 connected to the system bus 4108, but may be connected by other interfaces, such as a parallel port, an IEEE 1394 serial port, a game port, a USB port, an IR interface, and other interfaces.

A monitor 4144 or other types of display devices are also connected to the system bus 4108 through an interface, such as a video adaptor 4146. In addition to the monitor 4144, the computer generally includes other peripheral output devices (not illustrated), such as a speaker and a printer.

The computer 4102 may be operated in a networked environment by using a logical connection to one or more remote computers, such as remote computer(s) 4148, through wired and/or wireless communication. The remote computer(s) 4148 may be a work station, a computing device computer, a router, a personal computer, a portable computer, a microprocessor-based entertainment device, a peer device, and other general network nodes, and generally includes some or an entirety of the constituent elements described for the computer 4102, but only a memory storage device 4150 is illustrated for simplicity. The illustrated logical connection includes a wired/wireless connection to a local area network (LAN) 4152 and/or a larger network, for example, a wide area network (WAN) 4154. The LAN and WAN networking environments are general in an office and a company, and make an enterprise-wide computer network, such as an Intranet, easy, and all of the LAN and WAN networking environments may be connected to a worldwide computer network, for example, the Internet.

When the computer 4102 is used in the LAN networking environment, the computer 4102 is connected to the local network 4152 through a wired and/or wireless communication network interface or an adaptor 4156. The adaptor 4156 may make wired or wireless communication to the LAN 4152 easy, and the LAN 4152 also includes a wireless access point installed therein for the communication with the wireless adaptor 4156. When the computer 4102 is used in the WAN networking environment, the computer 4102 may include a modem 4158, is connected to a communication computing device on a WAN 4154, or includes other means setting communication through the WAN 4154 via the Internet. The modem 4158, which may be an embedded or outer-mounted and wired or wireless device, is connected to the system bus 4108 through a serial port interface 4142. In the networked environment, the program modules described for the computer 4102 or some of the program modules may be stored in a remote memory/storage device 4150. The illustrated network connection is illustrative, and those skilled in the art will appreciate well that other means setting a communication link between the computers may be used.

The computer 4102 performs an operation of communicating with a predetermined wireless device or entity, for example, a printer, a scanner, a desktop and/or portable computer, a portable data assistant (PDA), a communication satellite, predetermined equipment or place related to a wirelessly detectable tag, and a telephone, which is disposed by wireless communication and is operated. The operation includes a wireless fidelity (Wi-Fi) and Bluetooth wireless technology at least. Accordingly, the communication may have a pre-defined structure, such as a network in the related art, or may be simply ad hoc communication between at least two devices.

The Wi-Fi enables a connection to the Internet and the like even without a wire. The Wi-Fi is a wireless technology, such as a cellular phone, which enables the device, for example, the computer, to transmit and receive data indoors and outdoors, that is, in any place within a communication range of a base station. A Wi-Fi network uses a wireless technology, which is called IEEE 802.11 (a, b, g, etc.) for providing a safe, reliable, and high-rate wireless connection. The Wi-Fi may be used for connecting the computer to the computer, the Internet, and the wired network (IEEE 802.3 or Ethernet is used). The Wi-Fi network may be operated at, for example, a data rate of 11 Mbps (802.11a) or 54 Mbps (802.11b) in an unauthorized 2.4 and 5 GHz wireless band, or may be operated in a product including both bands (dual bands).

Those skilled in the art may appreciate that information and signals may be expressed by using predetermined various different technologies and techniques. For example, data, indications, commands, information, signals, bits, symbols, and chips referable in the foregoing description may be expressed with voltages, currents, electromagnetic waves, magnetic fields or particles, optical fields or particles, or a predetermined combination thereof.

In the meantime, according to an exemplary embodiment of the present disclosure, a computer readable medium storing a data structure is disclosed.

The data structure may refer to organization, management, and storage of data that enable efficient access and modification of data. The data structure may refer to organization of data for solving a specific problem (for example, data search, data storage, and data modification in the shortest time). The data structure may also be defined with a physical or logical relationship between the data elements designed to support a specific data processing function. A logical relationship between data elements may include a connection relationship between user defined data elements. A physical relationship between data elements may include an actual relationship between the data elements physically stored in a computer readable storage medium (for example, a permanent storage device). In particular, the data structure may include a set of data, a relationship between data, and a function or a command applicable to data. Through the effectively designed data structure, the computing device may perform a calculation while minimally using resources of the computing device. In particular, the computing device may improve efficiency of calculation, reading, insertion, deletion, comparison, exchange, and search through the effectively designed data structure.

The data structure may be divided into a linear data structure and a non-linear data structure according to the form of the data structure. The linear data structure may be the structure in which only one data is connected after one data. The linear data structure may include a list, a stack, a queue, and a deque. The list may mean a series of dataset in which order exists internally. The list may include a linked list. The linked list may have a data structure in which data is connected in a method in which each data has a pointer and is linked in a single line. In the linked list, the pointer may include information about the connection with the next or previous data. The linked list may be expressed as a single linked list, a double linked list, and a circular linked list according to the form. The stack may have a data listing structure with limited access to data. The stack may have a linear data structure that may process (for example, insert or delete) data only at one end of the data structure. The data stored in the stack may have a data structure (Last In First Out, LIFO) in which the later the data enters, the sooner the data comes out. The queue is a data listing structure with limited access to data, and may have a data structure (First In First Out, FIFO) in which the later the data is stored, the later the data comes out, unlike the stack. The deque may have a data structure that may process data at both ends of the data structure.

The non-linear data structure may be the structure in which the plurality of pieces of data is connected after one data. The non-linear data structure may include a graph data structure. The graph data structure may be defined with a vertex and an edge, and the edge may include a line connecting two different vertexes. The graph data structure may include a tree data structure. The tree data structure may be the data structure in which a path connecting two different vertexes among the plurality of vertexes included in the tree is one. That is, the tree data structure may be the data structure in which a loop is not formed in the graph data structure.

Throughout the present specification, a calculation model, a nerve network, the network function, and the neural network may be used with the same meaning. Hereinafter, the terms of the calculation model, the nerve network, the network function, and the neural network are unified and described with a neural network. The data structure may include a neural network. Further, the data structure including the neural network may be stored in a computer readable medium. The data structure including the neural network may also include data pre-processed by the processing by the neural network, data input to the neural network, a weight of the neural network, a hyper-parameter of the neural network, data obtained from the neural network, an active function associated with each node or layer of the neural network, and a loss function for training of the neural network. The data structure including the neural network may include predetermined configuration elements among the disclosed configurations. That is, the data structure including the neural network may also include all or a predetermined combination of preprocessed data for processing by the neural network, data input to the neural network, a weight of the neural network, a hyper-parameter of the neural network, data obtained from the neural network, an active function associated with each node or layer of the neural network, and a loss function for training of the neural network. **In** addition to the foregoing configurations, the data structure including the neural network may include predetermined other information determining a characteristic of the neural network. Further, the data structure may include all type of data used or generated in a computation process of the neural network, and is not limited to the foregoing matter. The computer readable medium may include a computer readable recording medium and/or a computer readable transmission medium. The neural network may be formed of a set of interconnected calculation units which are generally referred to as "nodes". The "nodes" may also be called "neurons". The neural network consists of one or more nodes.

The data structure may include data input to the neural network. The data structure including the data input to the neural network may be stored in the computer readable medium. The data input to the neural network may include training data input in the training process of the neural network and/or input data input to the training completed neural network. The data input to the neural network may include data that has undergone pre-processing and/or data to be pre-processed. The pre-processing may include a data processing process for inputting data to the neural network. Accordingly, the data structure may include data to be pre-processed and data generated by the pre-processing. The foregoing data structure is merely an example, and the present disclosure is not limited thereto.

The data structure may include a weight of the neural network. (in the present specification, weights and parameters may be used with the same meaning.) Further, the data structure including the weight of the neural network may be stored in the computer readable medium. The neural network may include a plurality of weights.

The weight is variable, and in order for the neural network to perform a desired function, the weight may be varied by a user or an algorithm. For example, when one or more input nodes are connected to one output node by links, respectively, the output node may determine a data value output from the output node based on values input to the input nodes connected to the output node and the weight set in the link corresponding to each of the input nodes. The foregoing data structure is merely an example, and the present disclosure is not limited thereto.

For a non-limited example, the weight may include a weight varied in the neural network training process and/or the weight when the training of the neural network is completed. The weight varied in the neural network training process may include a weight at a time at which a training cycle starts and/or a weight varied during a training cycle. The weight when the training of the neural network is completed may include a weight of the neural network completing the training cycle. Accordingly, the data structure including the weight of the neural network may include the data structure including the weight varied in the neural network training process and/or the weight when the training of the neural network is completed. Accordingly, it is assumed that the weight and/or a combination of the respective weights are included in the data structure including the weight of the neural network. The foregoing data structure is merely an example, and the present disclosure is not limited thereto.

The data structure including the weight of the neural network may be stored in the computer readable storage medium (for example, a memory and a hard disk) after undergoing a serialization process. The serialization may be the process of storing the data structure in the same or different computing devices and converting the data structure into a form that may be reconstructed and used later. The computing device may serialize the data structure and transceive the data through a network. The serialized data structure including the weight of the neural network may be reconstructed in the same or different computing devices through deserialization. The data structure including the weight of the neural network is not limited to the serialization. Further, the data structure including the weight of the neural network may include a data structure (for example, in the non-linear data structure, B-Tree, Trie, m-way search tree, AVL tree, and Red-Black Tree) for improving efficiency of the calculation while minimally using the resources of the computing device. The foregoing matter is merely an example, and the present disclosure is not limited thereto. The data structure may include a hyper-parameter of the neural network. The data structure including the hyper-parameter of the neural network may be stored in the computer readable medium. The hyper-parameter may be a variable varied by a user. The hyper-parameter may include, for example, a learning rate, a cost function, the number of times of repetition of the training cycle, weight initialization (for example, setting of a range of a weight value to be weight-initialized), and the number of hidden units (for example, the number of hidden layers and the number of nodes of the hidden layer). The foregoing data structure is merely an example, and the present disclosure is not limited thereto.

Those skilled in the art will appreciate that the various illustrative logical blocks, modules, processors, means, circuits, and algorithm operations described in relationship to the exemplary embodiments disclosed herein may be implemented by electronic hardware (for convenience, called "software" herein), various forms of program or design code, or a combination thereof. In order to clearly describe compatibility of the hardware and the software, various illustrative components, blocks, modules, circuits, and operations are generally illustrated above in relation to the functions of the hardware and the software. Whether the function is implemented as hardware or software depends on design limits given to a specific application or an entire system. Those skilled in the art may perform the function described by various schemes for each specific application, but it shall not be construed that the determinations of the performance depart from the scope of the present disclosure.

Various exemplary embodiments presented herein may be implemented by a method, a device, or a manufactured article using a standard programming and/or engineering technology. A term "manufactured article" includes a computer program, a carrier, or a medium accessible from a predetermined computer-readable storage device. For example, the computer-readable storage medium includes a magnetic storage device (for example, a hard disk, a floppy disk, and a magnetic strip), an optical disk (for example, a CD and a DVD), a smart card, and a flash memory device (for example, an EEPROM, a card, a stick, and a key drive), but is not limited thereto. Further, various storage media presented herein include one or more devices and/or other machine-readable media for storing information.

It shall be understood that a specific order or a hierarchical structure of the operations included in the presented processes is an example of illustrative accesses. It shall be understood that a specific order or a hierarchical structure of the operations included in the processes may be rearranged within the scope of the present disclosure based on design priorities. The accompanying method claims provide various operations of elements in a sample order, but it does not mean that the claims are limited to the presented specific order or hierarchical structure.

The description of the presented exemplary embodiments is provided so as for those skilled in the art to use or carry out the present disclosure. Various modifications of the exemplary embodiments may be apparent to those skilled in the art, and general principles defined herein may be applied to other exemplary embodiments.

Therefore, the present disclosure is not limited to the exemplary embodiments presented herein, and shall be interpreted in the broadest range consistent with the scope of the present invention as defined in the appended claims.

## Claims

1. A method for providing a dart game, the method being performed by a dart game device (1000), the method comprising:
obtaining, in response to a first throw of a first dart pin, a first image corresponding to a dart target including the first dart pin, wherein the dart target includes a plurality of segments, and each segment includes a predetermined number of bits;
obtaining, in response to a second throw of a second dart pin, a second image corresponding to the dart target including the second dart pin;
generating first location information of the first dart pin corresponding to the first image and second location information of the second dart pin corresponding to the second image by using an artificial intelligence-based dart pin location identification neural network model (1100), wherein the first location information includes a bit location within a segment hit by the first dart pin, and the second location information includes a bit location within a segment hit by the second dart pin; and
generating a play result for the dart game including the first throw and the second throw by using the first location information and the second location information,
wherein the play result for the dart game includes information indicating a player who wins by throwing any one of the first dart pin and the second dart pin to a location close to a specific location of the dart target among a plurality of players throwing the dart pins by comparing a first distance from the specific location of the dart target to a bit location within a segment hit by the first dart pin, and a second distance from the specific location of the dart target to a bit location within a segment hit by the second dart pin;
**characterized in that**
the first image and the second image are obtained by a camera unit (140), comprising at least two cameras (140) each positioned in a respective predetermined direction, connected to the dart game device (1000),
the obtaining of the first image includes obtaining the first image including a first-1 image and a first-2 image of the dart target hit by the first dart pin, photographed by said at least two cameras (140) from different directions in response to the first throw of the first dart pin, and
the obtaining of the second image includes obtaining the second image including a second-1 image and a second-2 image of the dart target hit by the second dart pin, photographed by said at least two cameras (140) from different directions in response to the second throw of the second dart pin;
wherein the generating of the first location information of the first dart pin corresponding to the first image and the second location information of the second dart pin corresponding to the second image by using the artificial intelligence-based dart pin location identification neural network model (1100) includes:
generating first input data by performing a merging operation on the first-1 image and the first-2 image of the dart target hit by the first dart pin, photographed by said at least two cameras (140) from different directions, and generating second input data by performing a merging operation on the second-1 image and the second-2 image of the dart target hit by the second dart pin, photographed by said at least two cameras (140) from different directions; and
generating the first location information of the first dart pin corresponding to the first image from the first input data and generating the second location information of the second dart pin from the second input data corresponding to the second image, by using the dart pin location identification neural network model (1100).

2. The method of claim 1, wherein the play result for the dart game further includes information indicating which of the first dart pin and the second dart pin hit a location close to a predetermined point on the dart target by comparing first location information corresponding to the first throw with second location information corresponding to the second throw.

3. The method of claim 1, wherein the play result for the dart game further includes information indicating which of the first dart pin and the second dart pin hit a location close to a center point of the dart target by comparing first location information corresponding to the first throw with second location information corresponding to the second throw.

4. The method of claim 1, wherein the play result for the dart game further includes a play image in which the first location information of the first dart pin and the second location information of the second dart pin are displayed on one dart target together.

5. The method of claim 4, wherein based on the first location information of the first dart pin and the second location information of the second dart pin, a region to be represented in a center portion of the play image among a plurality of regions included in the one dart target is dynamically determined.

6. The method of claim 4, wherein the play image includes a video image representing an image before and an image after the first dart pin reaches the dart target, and a video image representing an image before and an image after the second dart pin reaches the dart target in a state where the first dart pin has hit according to the second throw of the second dart pin.

7. The method of claim 4, wherein the play image includes a highlighted indication for comparing the first distance with the second distance based on the first location information of the first dart pin and the second location information of the second dart pin.

8. The method of claim 1, wherein the play result for the dart game further includes a play result indicating that priority is given to a player who throws a dart pin that hits a location close to a center point of the dart target between the first dart pin and the second dart pin by comparing first location information corresponding to the first throw with second location information corresponding to the second throw.

9. The method of claim 1, further comprising:
obtaining, in response to a third throw of a third dart pin, a third image corresponding to a dart target including the third dart pin; and
generating third location information of the third dart pin corresponding to the third image by using the artificial intelligence-based dart pin location identification neural network model (1100),
wherein the generating of the play result for the dart game includes generating a play result for the dart game based on area information corresponding to the first throw, the second throw, and the third throw from the dart target, the area information being generated by using the first location information, the second location information, and the third location information.

10. The method of claim 1, wherein each of the first input data and the second input data includes at least two bounding box images corresponding to at least two photographed images of a dart target; and
each of the first input data and the second input data includes images of the at least two bounding box images arranged in a predetermined direction.

11. The method of claim 10, wherein the dart pin location identification neural network model (1100) is trained by using a training dataset including training image data including at least two photographed images of the dart target hit by the dart pin, photographed by said at least two cameras (140) from different directions, and label data including hit location information of the dart pin corresponding to the training image data.

12. The method of claim 11, wherein the label data includes bit location information indicating location information of a bit within a segment of the dart target.

13. The method of claim 11, wherein the label data includes history information for identifying a current dart pin throw that is the subject of training within at least two photographed images of the dart target hit by the plurality of past dart pins throws.

14. The method of claim 13, wherein the history information includes at least one of a score value determined based on a dart pin throw or location information of the dart pin determined based on a dart pin throw.

15. The method of claim 13, wherein the dart pin location identification neural network model (1100) determines a past dart pin throw to be excluded in a training process from the history information included in the label data, from the plurality of past dart pin throws.

16. The method of claim 4, wherein the play image is displayed so that at least one segment in the dart target corresponding to the first location information of the first dart pin and the second location information of the second dart pin protrudes relative to other segments of the dart target in order to compare the first distance with the second distance.

17. A dart game device (1000) for providing a dart game, the dart game device (1000) comprising:
a camera unit (140) for obtaining, in response to a first throw of a first dart pin, a first image corresponding to a dart target including the first dart pin, and obtaining, in response to a second throw of a second dart pin, a second image corresponding to the dart target including the second dart pin, wherein the dart target includes a plurality of segments, and each segment includes a predetermined number of bits; and
a control unit (100) for generating first location information of the first dart pin corresponding to the first image and second location information of the second dart pin corresponding to the second image by using an artificial intelligence-based dart pin location identification neural network model (1100), and generating a play result for the dart game including the first throw and the second throw by using the first location information and the second location information, wherein the first location information includes a bit location within a segment hit by the first dart pin, and the second location information includes a bit location within a segment hit by the second dart pin,
wherein the play result for the dart game includes information indicating a player who wins by throwing any one of the first dart pin and the second dart pin to a location close to a specific location of the dart target among a plurality of players throwing the dart pins by comparing a first distance from the specific location of the dart target to a bit location within a segment hit by the first dart pin, and a second distance from the specific location of the dart target to a bit location within a segment hit by the second dart pin;
**characterised in that**
the camera unit (140) comprises at least two cameras (140) each positioned in a respective predetermined direction, connected to the dart game device (1000), for obtaining the first image and the second image, wherein the obtaining of the first image includes obtaining the first image including a first-1 image and a first-2 image of the dart target hit by the first dart pin, photographed by said at least two cameras (140) from different directions in response to the first throw of the first dart pin, and the obtaining of the second image includes obtaining the second image including a second-1 image and a second-2 image of the dart target hit by the second dart pin, photographed by said at least two cameras (140) from different directions in response to the second throw of the second dart pin;
wherein the generating of the first location information of the first dart pin corresponding to the first image and the second location information of the second dart pin corresponding to the second image by using the artificial intelligence-based dart pin location identification neural network model (1100) includes:
generating first input data by performing a merging operation on the first-1 image and the first-2 image of the dart target hit by the first dart pin, photographed by said at least two cameras (140) from different directions, and generating second input data by performing a merging operation on the second-1 image and the second-2 image of the dart target hit by the second dart pin, photographed by said at least two cameras (140) from different directions; and
generating the first location information of the first dart pin corresponding to the first image from the first input data and generating the second location information of the second dart pin from the second input data corresponding to the second image, by using the dart pin location identification neural network model (1100).

18. A computer program stored in a computer-readable storage medium, the computer program allowing at least one processor to perform operations for providing a dart game when being executed by the at least one processor, the operations comprising:
an operation of obtaining, in response to a first throw of a first dart pin, a first image corresponding to a dart target including the first dart pin, wherein the dart target includes a plurality of segments, and each segment includes a predetermined number of bits;
an operation of obtaining, in response to a second throw of a second dart pin, a second image corresponding to the dart target including the second dart pin;
an operation of generating first location information of the first dart pin corresponding to the first image and second location information of the second dart pin corresponding to the second image by using an artificial intelligence-based dart pin location identification neural network model (1100), wherein the first location information includes a bit location within a segment hit by the first dart pin, and the second location information includes a bit location within a segment hit by the second dart pin; and
an operation of generating a play result for the dart game including the first throw and the second throw by using the first location information and the second location information,
wherein the play result for the dart game includes information indicating a player who wins by throwing any one of the first dart pin and the second dart pin to a location close to a specific location of the dart target among a plurality of players throwing the dart pins by comparing a first distance from the specific location of the dart target to a bit location within a segment hit by the first dart pin, and a second distance from the specific location of the dart target to a bit location within a segment hit by the second dart pin;
**characterised in that**
the first image and the second image are obtained by a camera unit (140), comprising at least two cameras (140) each positioned in a respective predetermined direction, connected to the dart game device (1000),
wherein the obtaining of the first image includes obtaining the first image including a first-1 image and a first-2 image of the dart target hit by the first dart pin, photographed by said at least two cameras (140) from different directions in response to the first throw of the first dart pin, and
wherein the obtaining of the second image includes obtaining the second image including a second-1 image and a second-2 image of the dart target hit by the second dart pin, photographed by said at least two cameras (140) from different directions in response to the second throw of the second dart pin;
wherein the generating of the first location information of the first dart pin corresponding to the first image and the second location information of the second dart pin corresponding to the second image by using the artificial intelligence-based dart pin location identification neural network model (1100) includes:
generating first input data by performing a merging operation on the first-1 image and the first-2 image of the dart target hit by the first dart pin, photographed by said at least two cameras (140) from different directions, and generating second input data by performing a merging operation on the second-1 image and the second-2 image of the dart target hit by the second dart pin, photographed by said at least two cameras (140) from different directions; and
generating the first location information of the first dart pin corresponding to the first image from the first input data and generating the second location information of the second dart pin from the second input data corresponding to the second image, by using the dart pin location identification neural network model (1100).

## Patentansprüche

1. Verfahren zum Bereitstellen eines Wurfpfeilspiels, wobei das Verfahren von einer Wurfpfeilspielvorrichtung (1000) durchgeführt wird, wobei das Verfahren Folgendes umfasst:
Erlangen, als Reaktion auf einen ersten Wurf eines ersten Wurfpfeils, eines ersten Bildes, das einer Wurfpfeilzielscheibe einschließlich des ersten Wurfpfeils entspricht, wobei die Wurfpfeilzielscheibe eine Vielzahl von Segmenten einschließt und jedes Segment eine vorbestimmte Anzahl von Bits einschließt;
Erlangen, als Reaktion auf einen zweiten Wurf eines zweiten Wurfpfeils, eines zweiten Bildes, das der Wurfpfeilzielscheibe einschließlich des zweiten Wurfpfeils entspricht;
Erzeugen von ersten Positionsinformationen des ersten Wurfpfeils entsprechend dem ersten Bild und von zweiten Positionsinformationen des zweiten Wurfpfeils entsprechend dem zweiten Bild unter Verwendung eines auf künstlicher Intelligenz basierenden neuronalen Netzwerkmodells (1100) zur Wurfpfeilpositionsidentifizierung, wobei die ersten Positionsinformationen eine Bitposition innerhalb eines von dem ersten Wurfpfeil getroffenen Segments einschließen und die zweiten Positionsinformationen eine Bitposition innerhalb eines von dem zweiten Wurfpfeil getroffenen Segments einschließen; und
Erzeugen eines Spielergebnisses für das Wurfpfeilspiel, das den ersten Wurf und den zweiten Wurf einschließt, unter Verwendung der ersten Positionsinformationen und der zweiten Positionsinformationen,
wobei das Spielergebnis für das Wurfpfeilspiel Informationen einschließt, die einen Spieler anzeigen, der unter einer Vielzahl von Spielern, die die Wurfpfeile werfen, gewinnt, indem er einen von dem ersten Wurfpfeil und dem zweiten Wurfpfeil an eine Stelle nahe einer spezifischen Stelle auf der Wurfpfeilzielscheibe wirft, indem eine erste Entfernung von der spezifischen Stelle auf der Wurfpfeilzielscheibe zu einer Bitposition innerhalb eines von dem ersten Wurfpfeil getroffenen Segments und eine zweite Entfernung von der spezifischen Stelle auf der Wurfpfeilzielscheibe zu einer Bitposition innerhalb eines von dem zweiten Wurfpfeil getroffenen Segments verglichen werden;
**dadurch gekennzeichnet, dass** das erste Bild und das zweite Bild durch eine Kameraeinheit (140) erlangt werden, die mindestens zwei Kameras (140) umfasst, von denen jede in einer jeweiligen vorbestimmten Richtung positioniert ist, und die mit der Wurfpfeilspielvorrichtung (1000) verbunden sind,
das Erlangen des ersten Bildes das Erlangen des ersten Bildes einschließlich eines ersten-1 Bildes und eines ersten-2 Bildes der von dem ersten Wurfpfeil getroffenen Wurfpfeilzielscheibe, die von den mindestens zwei Kameras (140) aus verschiedenen Richtungen als Reaktion auf den ersten Wurf des ersten Wurfpfeils fotografiert wird, einschließt, und
das Erlangen des zweiten Bildes das Erlangen des zweiten Bildes einschließlich eines zweiten-1 Bildes und eines zweiten-2 Bildes der von dem zweiten Wurfpfeil getroffenen Wurfpfeilzielscheibe, die von den mindestens zwei Kameras (140) aus verschiedenen Richtungen als Reaktion auf den zweiten Wurf des zweiten Wurfpfeils fotografiert wird, einschließt;
wobei das Erzeugen der ersten Positionsinformationen des ersten Wurfpfeils entsprechend dem ersten Bild und der zweiten Positionsinformationen des zweiten Wurfpfeils entsprechend dem zweiten Bild unter Verwendung des auf künstlicher Intelligenz basierenden neuronalen Netzwerkmodells (1100) zur Wurfpfeilpositionsidentifizierung Folgendes einschließt:
Erzeugen erster Eingabedaten durch Durchführen einer Zusammenführungsoperation an dem ersten-1 Bild und dem ersten-2 Bild der von dem ersten Wurfpfeil getroffenen Wurfpfeilzielscheibe, die von den mindestens zwei Kameras (140) aus verschiedenen Richtungen fotografiert wird, und Erzeugen zweiter Eingabedaten durch Durchführen einer Zusammenführungsoperation an dem zweiten-1 Bild und dem zweiten-2 Bild der von dem zweiten Wurfpfeil getroffenen Wurfpfeilzielscheibe, die von den mindestens zwei Kameras (140) aus verschiedenen Richtungen fotografiert wird; und
Erzeugen der ersten Positionsinformationen des ersten Wurfpfeils entsprechend dem ersten Bild aus den ersten Eingabedaten und Erzeugen der zweiten Positionsinformationen des zweiten Wurfpfeils aus den zweiten Eingabedaten entsprechend dem zweiten Bild unter Verwendung des neuronalen Netzwerkmodells (1100) zur Wurfpfeilpositionsidentifizierung.

2. Verfahren nach Anspruch 1, wobei das Spielergebnis für das Wurfpfeilspiel ferner Informationen einschließt, die anzeigen, welcher von dem ersten Wurfpfeil und dem zweiten Wurfpfeil eine Stelle nahe einem vorbestimmten Punkt auf der Wurfpfeilzielscheibe getroffen hat, indem erste Positionsinformationen, die dem ersten Wurf entsprechen, mit zweiten Positionsinformationen, die dem zweiten Wurf entsprechen, verglichen werden.

3. Verfahren nach Anspruch 1, wobei das Spielergebnis für das Wurfpfeilspiel ferner Informationen einschließt, die anzeigen, welcher von dem ersten Wurfpfeil und dem zweiten Wurfpfeil eine Stelle nahe einem Mittelpunkt der Wurfpfeilzielscheibe getroffen hat, indem die ersten Positionsinformationen, die dem ersten Wurf entsprechen, mit zweiten Positionsinformationen, die dem zweiten Wurf entsprechen, verglichen werden.

4. Verfahren nach Anspruch 1, wobei das Spielergebnis für das Wurfpfeilspiel ferner ein Spielbild einschließt, in dem die ersten Positionsinformationen des ersten Wurfpfeils und die zweiten Positionsinformationen des zweiten Wurfpfeils zusammen auf einer Wurfpfeilzielscheibe angezeigt werden.

5. Verfahren nach Anspruch 4, wobei basierend auf den ersten Positionsinformationen des ersten Wurfpfeils und den zweiten Positionsinformationen des zweiten Wurfpfeils eine Region, die in einem mittleren Teil des Spielbildes dargestellt werden soll, aus einer Vielzahl von Regionen, die in der einen Wurfpfeilzielscheibe eingeschlossen sind, dynamisch bestimmt wird.

6. Verfahren nach Anspruch 4, wobei das Spielbild ein Videobild einschließt, das ein Bild vor und ein Bild nach dem Erreichen der Wurfpfeilzielscheibe durch den ersten Wurfpfeil darstellt, und ein Videobild einschließt, das ein Bild vor und ein Bild nach dem Erreichen der Wurfpfeilzielscheibe durch den zweiten Wurfpfeil in einem Zustand darstellt, in dem der erste Wurfpfeil gemäß dem zweiten Wurf des zweiten Wurfpfeils getroffen hat.

7. Verfahren nach Anspruch 4, wobei das Spielbild eine hervorgehobene Anzeige zum Vergleichen der ersten Entfernung mit der zweiten Entfernung basierend auf den ersten Positionsinformationen des ersten Wurfpfeils und den zweiten Positionsinformationen des zweiten Wurfpfeils einschließt.

8. Verfahren nach Anspruch 1, wobei das Spielergebnis für das Wurfpfeilspiel ferner ein Spielergebnis einschließt, das anzeigt, dass einem Spieler Vorrang eingeräumt wird, der einen Wurfpfeil wirft, der eine Stelle nahe einem Mittelpunkt der Wurfpfeilzielscheibe zwischen dem ersten Wurfpfeil und dem zweiten Wurfpfeil trifft, indem die ersten Positionsinformationen, die dem ersten Wurf entsprechen, mit zweiten Positionsinformationen, die dem zweiten Wurf entsprechen, verglichen werden.

9. Verfahren nach Anspruch 1, ferner umfassend:
Erlangen, als Reaktion auf einen dritten Wurf eines dritten Wurfpfeils, eines dritten Bildes, das der Wurfpfeilzielscheibe einschließlich des dritten Wurfpfeils entspricht; und
Erzeugen von dritten Positionsinformationen des dritten Wurfpfeils entsprechend dem dritten Bild unter Verwendung des auf künstlicher Intelligenz basierenden neuronalen Netzwerkmodells (1100) zur Wurfpfeilpositionsidentifizierung,
wobei das Erzeugen des Spielergebnisses für das Wurfpfeilspiel das Erzeugen eines Spielergebnisses für das Wurfpfeilspiel basierend auf Bereichsinformationen, die dem ersten Wurf, dem zweiten Wurf und dem dritten Wurf entsprechen, von der Wurfpfeilzielscheibe einschließt, wobei die Bereichsinformationen unter Verwendung der ersten Positionsinformationen, der zweiten Positionsinformationen und der dritten Positionsinformationen erzeugt werden.

10. Verfahren nach Anspruch 1, wobei sowohl die ersten Eingabedaten als auch die zweiten Eingabedaten mindestens zwei Begrenzungsrahmenbilder einschließen, die mindestens zwei fotografierten Bildern einer Wurfpfeilzielscheibe entsprechen; und
sowohl die ersten Eingabedaten als auch die zweiten Eingabedaten Bilder der mindestens zwei Begrenzungsrahmenbilder einschließen, die in einer vorbestimmten Richtung angeordnet sind.

11. Verfahren nach Anspruch 10, wobei das neuronale Netzwerkmodell (1100) zur Wurfpfeilpositionsidentifizierung unter Verwendung eines Trainingsdatensatzes trainiert wird, der Trainingsbilddaten mit mindestens zwei fotografierten Bildern der von dem Wurfpfeil getroffenen Wurfpfeilzielscheibe, die von den mindestens zwei Kameras (140) aus verschiedenen Richtungen fotografiert wird, und Kennzeichnungsdaten mit Treffpositionsinformationen des Wurfpfeils entsprechend den Trainingsbilddaten einschließt.

12. Verfahren nach Anspruch 11, wobei die Kennzeichnungsdaten Bitpositionsinformationen einschließen, die Positionsinformationen eines Bits innerhalb eines Segments der Wurfpfeilzielscheibe angeben.

13. Verfahren nach Anspruch 11, wobei die Kennzeichnungsdaten Verlaufsinformationen zum Identifizieren eines aktuellen Wurfs eines Wurfpfeils, der Gegenstand des Trainings ist, innerhalb von mindestens zwei fotografierten Bildern der Wurfpfeilzielscheibe, die von der Vielzahl vergangener Würfe von Wurfpfeilen getroffen wurde, einschließen.

14. Verfahren nach Anspruch 13, wobei die Verlaufsinformationen mindestens eines von einem Punktewert, der basierend auf einem Wurf eines Wurfpfeils bestimmt wird, oder Positionsinformationen des Wurfpfeils, die basierend auf einem Wurf eines Wurfpfeils bestimmt werden, einschließen.

15. Verfahren nach Anspruch 13, wobei das neuronale Netzwerkmodell (1100) zur Wurfpfeilpositionsidentifizierung einen vergangenen Wurf eines Wurfpfeils, der in einem Trainingsprozess aus den in den Kennzeichnungsdaten enthaltenen Verlaufsinformationen ausgeschlossen werden soll, aus der Vielzahl von vergangenen Würfen eines Wurfpfeils bestimmt.

16. Verfahren nach Anspruch 4, wobei das Spielbild so angezeigt wird, dass mindestens ein Segment in der Wurfpfeilzielscheibe, das den ersten Positionsinformationen des ersten Wurfpfeils und den zweiten Positionsinformationen des zweiten Wurfpfeils entspricht, relativ zu anderen Segmenten der Wurfpfeilzielscheibe hervorsteht, um die erste Entfernung mit der zweiten Entfernung zu vergleichen.

17. Wurfpfeilspielvorrichtung (1000) zum Bereitstellen eines Wurfpfeilspiels, wobei die Wurfpfeilspielvorrichtung (1000) Folgendes umfasst:
eine Kameraeinheit (140) zum Erlangen, als Reaktion auf einen ersten Wurf eines ersten Wurfpfeils, eines ersten Bildes, das einer Wurfpfeilzielscheibe einschließlich des ersten Wurfpfeils entspricht, und zum Erlangen, als Reaktion auf einen zweiten Wurf eines zweiten Wurfpfeils, eines zweiten Bildes, das der Wurfpfeilzielscheibe einschließlich des zweiten Wurfpfeils entspricht, wobei die Wurfpfeilzielscheibe eine Vielzahl von Segmenten einschließt und jedes Segment eine vorbestimmte Anzahl von Bits einschließt; und
eine Steuereinheit (100) zum Erzeugen von ersten Positionsinformationen des ersten Wurfpfeils entsprechend dem ersten Bild und von zweiten Positionsinformationen des zweiten Wurfpfeils entsprechend dem zweiten Bild unter Verwendung eines auf künstlicher Intelligenz basierenden neuronalen Netzwerkmodells (1100) zur Wurfpfeilpositionsidentifizierung, und zum Erzeugen eines Spielergebnisses für das Wurfpfeilspiel, das den ersten Wurf und den zweiten Wurf einschließt, unter Verwendung der ersten Positionsinformationen und der zweiten Positionsinformationen, wobei die ersten Positionsinformationen eine Bitposition innerhalb eines von dem ersten Wurfpfeil getroffenen Segments einschließen und die zweiten Positionsinformationen eine Bitposition innerhalb eines von dem zweiten Wurfpfeil getroffenen Segments einschließen,
wobei das Spielergebnis für das Wurfpfeilspiel Informationen einschließt, die einen Spieler anzeigen, der unter einer Vielzahl von Spielern, die die Wurfpfeile werfen, gewinnt, indem er einen von dem ersten Wurfpfeil und dem zweiten Wurfpfeil an eine Stelle nahe einer spezifischen Stelle auf der Wurfpfeilzielscheibe wirft, indem eine erste Entfernung von der spezifischen Stelle auf der Wurfpfeilzielscheibe zu einer Bitposition innerhalb eines von dem ersten Wurfpfeil getroffenen Segments und eine zweite Entfernung von der spezifischen Stelle auf der Wurfpfeilzielscheibe zu einer Bitposition innerhalb eines von dem zweiten Wurfpfeil getroffenen Segments verglichen werden;
**dadurch gekennzeichnet, dass** die Kameraeinheit (140) mindestens zwei Kameras (140), von denen jede in einer jeweiligen vorbestimmten Richtung positioniert ist, und die mit der Wurfpfeilspielvorrichtung (1000) verbunden sind, zum Erlangen des ersten Bildes und des zweiten Bildes umfasst, wobei das Erlangen des ersten Bildes das Erlangen des ersten Bildes einschließlich eines ersten-1 Bildes und eines ersten-2 Bildes der von dem ersten Wurfpfeil getroffenen Wurfpfeilzielscheibe, die von den mindestens zwei Kameras (140) aus verschiedenen Richtungen als Reaktion auf den ersten Wurf des ersten Wurfpfeils fotografiert wird, einschließt, und das Erlangen des zweiten Bildes das Erlangen des zweiten Bildes einschließlich eines zweiten-1 Bildes und eines zweiten-2 Bildes der von dem zweiten Wurfpfeil getroffenen Wurfpfeilzielscheibe, die von den mindestens zwei Kameras (140) aus verschiedenen Richtungen als Reaktion auf den zweiten Wurf des zweiten Wurfpfeils fotografiert wird, einschließt;
wobei das Erzeugen der ersten Positionsinformationen des ersten Wurfpfeils entsprechend dem ersten Bild und der zweiten Positionsinformationen des zweiten Wurfpfeils entsprechend dem zweiten Bild unter Verwendung des auf künstlicher Intelligenz basierenden neuronalen Netzwerkmodells (1100) zur Wurfpfeilpositionsidentifizierung Folgendes einschließt:
Erzeugen erster Eingabedaten durch Durchführen einer Zusammenführungsoperation an dem ersten-1 Bild und dem ersten-2 Bild der von dem ersten Wurfpfeil getroffenen Wurfpfeilzielscheibe, die von den mindestens zwei Kameras (140) aus verschiedenen Richtungen fotografiert wird, und Erzeugen zweiter Eingabedaten durch Durchführen einer Zusammenführungsoperation an dem zweiten-1 Bild und dem zweiten-2 Bild der von dem zweiten Wurfpfeil getroffenen Wurfpfeilzielscheibe, die von den mindestens zwei Kameras (140) aus verschiedenen Richtungen fotografiert wird; und
Erzeugen der ersten Positionsinformationen des ersten Wurfpfeils entsprechend dem ersten Bild aus den ersten Eingabedaten und Erzeugen der zweiten Positionsinformationen des zweiten Wurfpfeils aus den zweiten Eingabedaten entsprechend dem zweiten Bild unter Verwendung des neuronalen Netzwerkmodells (1100) zur Wurfpfeilpositionsidentifizierung.

18. Computerprogramm, das in einem computerlesbaren Speichermedium gespeichert ist, wobei das Computerprogramm mindestens einem Prozessor erlaubt, Operationen zur Bereitstellung eines Wurfpfeilspiels durchzuführen, wenn es von dem mindestens einen Prozessor ausgeführt wird, wobei die Operationen umfassen:
eine Operation des Erlangens, als Reaktion auf einen ersten Wurf eines ersten Wurfpfeils, eines ersten Bildes, das einer Wurfpfeilzielscheibe einschließlich des ersten Wurfpfeils entspricht, wobei die Wurfpfeilzielscheibe eine Vielzahl von Segmenten einschließt und jedes Segment eine vorbestimmte Anzahl von Bits einschließt;
eine Operation des Erlangens, als Reaktion auf einen zweiten Wurf eines zweiten Wurfpfeils, eines zweiten Bildes, das der Wurfpfeilzielscheibe einschließlich des zweiten Wurfpfeils entspricht;
eine Operation des Erzeugens von ersten Positionsinformationen des ersten Wurfpfeils entsprechend dem ersten Bild und von zweiten Positionsinformationen des zweiten Wurfpfeils entsprechend dem zweiten Bild unter Verwendung eines auf künstlicher Intelligenz basierenden neuronalen Netzwerkmodells (1100) zur Wurfpfeilpositionsidentifizierung, wobei die ersten Positionsinformationen eine Bitposition innerhalb eines von dem ersten Wurfpfeil getroffenen Segments einschließen und die zweiten Positionsinformationen eine Bitposition innerhalb eines von dem zweiten Wurfpfeil getroffenen Segments einschließen; und
eine Operation des Erzeugens eines Spielergebnisses für das Wurfpfeilspiel, das den ersten Wurf und den zweiten Wurf einschließt, unter Verwendung der ersten Positionsinformationen und der zweiten Positionsinformationen,
wobei das Spielergebnis für das Wurfpfeilspiel Informationen einschließt, die einen Spieler anzeigen, der unter einer Vielzahl von Spielern, die die Wurfpfeile werfen, gewinnt, indem er einen von dem ersten Wurfpfeil und dem zweiten Wurfpfeil an eine Stelle nahe einer spezifischen Stelle auf der Wurfpfeilzielscheibe wirft, indem eine erste Entfernung von der spezifischen Stelle auf der Wurfpfeilzielscheibe zu einer Bitposition innerhalb eines von dem ersten Wurfpfeil getroffenen Segments und eine zweite Entfernung von der spezifischen Stelle auf der Wurfpfeilzielscheibe zu einer Bitposition innerhalb eines von dem zweiten Wurfpfeil getroffenen Segments verglichen werden;
**dadurch gekennzeichnet, dass** das erste Bild und das zweite Bild durch eine Kameraeinheit (140) erlangt werden, die mindestens zwei Kameras (140) umfasst, von denen jede in einer jeweiligen vorbestimmten Richtung positioniert ist, und die mit der Wurfpfeilspielvorrichtung (1000) verbunden sind,
wobei das Erlangen des ersten Bildes das Erlangen des ersten Bildes einschließlich eines ersten-1 Bildes und eines ersten-2 Bildes der von dem ersten Wurfpfeil getroffenen Wurfpfeilzielscheibe, die von den mindestens zwei Kameras (140) aus verschiedenen Richtungen als Reaktion auf den ersten Wurf des ersten Wurfpfeils fotografiert wird, einschließt, und
wobei das Erlangen des zweiten Bildes das Erlangen des zweiten Bildes einschließlich eines zweiten-1 Bildes und eines zweiten-2 Bildes der von dem zweiten Wurfpfeil getroffenen Wurfpfeilzielscheibe, die von den mindestens zwei Kameras (140) aus verschiedenen Richtungen als Reaktion auf den zweiten Wurf des zweiten Wurfpfeils fotografiert wird, einschließt;
wobei das Erzeugen der ersten Positionsinformationen des ersten Wurfpfeils entsprechend dem ersten Bild und der zweiten Positionsinformationen des zweiten Wurfpfeils entsprechend dem zweiten Bild unter Verwendung des auf künstlicher Intelligenz basierenden neuronalen Netzwerkmodells (1100) zur Wurfpfeilpositionsidentifizierung Folgendes einschließt:
Erzeugen erster Eingabedaten durch Durchführen einer Zusammenführungsoperation an dem ersten-1 Bild und dem ersten-2 Bild der von dem ersten Wurfpfeil getroffenen Wurfpfeilzielscheibe, die von den mindestens zwei Kameras (140) aus verschiedenen Richtungen fotografiert wird, und Erzeugen zweiter Eingabedaten durch Durchführen einer Zusammenführungsoperation an dem zweiten-1 Bild und dem zweiten-2 Bild der von dem zweiten Wurfpfeil getroffenen Wurfpfeilzielscheibe, die von den mindestens zwei Kameras (140) aus verschiedenen Richtungen fotografiert wird; und
Erzeugen der ersten Positionsinformationen des ersten Wurfpfeils entsprechend dem ersten Bild aus den ersten Eingabedaten und Erzeugen der zweiten Positionsinformationen des zweiten Wurfpfeils aus den zweiten Eingabedaten entsprechend dem zweiten Bild unter Verwendung des neuronalen Netzwerkmodells (1100) zur Wurfpfeilpositionsidentifizierung.

## Revendications

1. Procédé de fourniture d'un jeu de fléchettes, le procédé étant réalisé par un dispositif de jeu de fléchettes (1000), le procédé comprenant :
l'obtention, en réponse à un premier lancer d'une première pointe de fléchette, d'une première image correspondant à une cible de fléchette comportant la première pointe de fléchette, dans lequel la cible de fléchette comporte une pluralité de segments, et chaque segment comporte un nombre prédéterminé de bits ;
l'obtention, en réponse à un deuxième lancer d'une deuxième pointe de fléchette, d'une deuxième image correspondant à la cible de fléchette comportant la deuxième pointe de fléchette ;
la génération de premières informations d'emplacement de la première pointe de fléchette correspondant à la première image et de deuxièmes informations d'emplacement de la deuxième pointe de fléchette correspondant à la deuxième image en utilisant un modèle de réseau neuronal d'identification d'emplacement de pointe de fléchette (1100) basé sur l'intelligence artificielle, dans lequel les premières informations d'emplacement comportent un emplacement de bit dans un segment frappé par la première pointe de fléchette, et les deuxièmes informations d'emplacement comportent un emplacement de bit dans un segment frappé par la deuxième pointe de fléchette ; et
la génération d'un résultat de partie pour le jeu de fléchettes comportant le premier lancer et le deuxième lancer en utilisant les premières informations d'emplacement et les deuxièmes informations d'emplacement,
dans lequel le résultat de partie pour le jeu de fléchettes comporte des informations indiquant un joueur qui gagne en lançant l'une quelconque de la première pointe de fléchette et de la deuxième pointe de fléchette à un emplacement proche d'un emplacement spécifique de la cible de fléchette parmi une pluralité de joueurs lançant les pointes de fléchette en comparant une première distance de l'emplacement spécifique de la cible de fléchette à un emplacement de bit dans un segment frappé par la première pointe de fléchette, et une seconde distance de l'emplacement spécifique de la cible de fléchette à un emplacement de bit dans un segment frappé par la deuxième pointe de fléchette ;
**caractérisé en ce que** la première image et la deuxième image sont obtenues par une unité d'appareil de prise de vues (140), comprenant au moins deux appareils de prise de vues (140) positionnés chacun dans une direction prédéterminée respective, connectée au dispositif de jeu de fléchettes (1000),
l'obtention de la première image comporte l'obtention de la première image comportant une première image 1 et une première image 2 de la cible de fléchette frappée par la première pointe de fléchette, photographiée par lesdits au moins deux appareils de prise de vues (140) à partir de directions différentes en réponse au premier lancer de la première pointe de fléchette, et
l'obtention de la deuxième image comporte l'obtention de la deuxième image comportant une seconde image 1 et une seconde image 2 de la cible de fléchette frappée par la deuxième pointe de fléchette, photographiée par lesdits au moins deux appareils de prise de vues (140) à partir de directions différentes en réponse au deuxième lancer de la deuxième pointe de fléchette ;
dans lequel la génération des premières informations d'emplacement de la première pointe de fléchette correspondant à la première image et des deuxièmes informations d'emplacement de la deuxième pointe de fléchette correspondant à la deuxième image en utilisant le modèle de réseau neuronal d'identification d'emplacement de pointe de fléchette (1100) basé sur l'intelligence artificielle comporte :
la génération de premières données d'entrée en réalisant une opération de fusion sur la première image 1 et la première image 2 de la cible de fléchette frappée par la première pointe de fléchette, photographiée par lesdits au moins deux appareils de prise de vues (140) à partir de directions différentes, et la génération de secondes données d'entrée en réalisant une opération de fusion sur la seconde image 1 et la seconde image 2 de la cible de fléchette frappée par la deuxième pointe de fléchette, photographiée par lesdits au moins deux appareils de prise de vues (140) à partir de directions différentes ; et
la génération des premières informations d'emplacement de la première pointe de fléchette correspondant à la première image à partir des premières données d'entrée et la génération des deuxièmes informations d'emplacement de la deuxième pointe de fléchette à partir des secondes données d'entrée correspondant à la deuxième image, en utilisant le modèle de réseau neuronal d'identification d'emplacement de pointe de fléchette (1100).

2. Procédé selon la revendication 1, dans lequel le résultat de partie pour le jeu de fléchettes comporte en outre des informations indiquant laquelle de la première pointe de fléchette et de la deuxième pointe de fléchette frappe un emplacement proche d'un point prédéterminé sur la cible de fléchette en comparant des premières informations d'emplacement correspondant au premier lancer avec des deuxièmes informations d'emplacement correspondant au deuxième lancer.

3. Procédé selon la revendication 1, dans lequel le résultat de partie pour le jeu de fléchettes comporte en outre des informations indiquant laquelle de la première pointe de fléchette et de la deuxième pointe de fléchette frappe un emplacement proche d'un point central de la cible de fléchette en comparant des premières informations d'emplacement correspondant au premier lancer avec des deuxièmes informations d'emplacement correspondant au deuxième lancer.

4. Procédé selon la revendication 1, dans lequel le résultat de partie pour le jeu de fléchettes comporte en outre une image de partie dans laquelle les premières informations d'emplacement de la première pointe de fléchette et les deuxièmes informations d'emplacement de la deuxième pointe de fléchette sont affichées ensemble sur une cible de fléchette.

5. Procédé selon la revendication 4, dans lequel, sur la base des premières informations d'emplacement de la première pointe de fléchette et des deuxièmes informations d'emplacement de la deuxième pointe de fléchette, une région à représenter dans une portion centrale de l'image de partie parmi une pluralité de régions incluses dans la cible de fléchette est déterminée de manière dynamique.

6. Procédé selon la revendication 4, dans lequel l'image de partie comporte une image vidéo représentant une image avant et une image après que la première pointe de fléchette ait atteint la cible de fléchette, et une image vidéo représentant une image avant et une image après que la deuxième pointe de fléchette ait atteint la cible de fléchette dans un état où la première pointe de fléchette a frappé selon le deuxième lancer de la deuxième pointe de fléchette.

7. Procédé selon la revendication 4, dans lequel l'image de partie comporte une indication en surbrillance pour comparer la première distance avec la seconde distance sur la base des premières informations d'emplacement de la première pointe de fléchette et des deuxièmes informations d'emplacement de la deuxième pointe de fléchette.

8. Procédé selon la revendication 1, dans lequel le résultat de partie pour le jeu de fléchettes comporte en outre un résultat de partie indiquant que la priorité est donnée à un joueur qui lance une pointe de fléchette qui frappe un emplacement proche d'un point central de la cible de fléchette entre la première pointe de fléchette et la deuxième pointe de fléchette, en comparant des premières informations d'emplacement correspondant au premier lancer avec des deuxièmes informations d'emplacement correspondant au deuxième lancer.

9. Procédé selon la revendication 1, comprenant en outre :
l'obtention, en réponse à un troisième lancer d'une troisième pointe de fléchette, d'une troisième image correspondant à une cible de fléchette comportant la troisième pointe de fléchette ; et
la génération de troisièmes informations d'emplacement de la troisième pointe de fléchette correspondant à la troisième image en utilisant le modèle de réseau neuronal d'identification d'emplacement de pointe de fléchette (1100) basé sur l'intelligence artificielle,
dans lequel la génération du résultat de partie pour le jeu de fléchettes comporte la génération d'un résultat de partie pour le jeu de fléchettes basé sur des informations de zone correspondant au premier lancer, au deuxième lancer et au troisième lancer de la cible de fléchette, les informations de zone étant générées en utilisant les premières informations d'emplacement, les deuxièmes informations d'emplacement et les troisièmes informations d'emplacement.

10. Procédé selon la revendication 1, dans lequel chacune des premières données d'entrée et des secondes données d'entrée comporte au moins deux images de boîtes de délimitation correspondant à au moins deux images photographiées d'une cible de fléchette ; et
chacune des premières données d'entrée et des secondes données d'entrée comporte des images des au moins deux images de boîtes de délimitation disposées dans une direction prédéterminée.

11. Procédé selon la revendication 10, dans lequel le modèle de réseau neuronal d'identification d'emplacement de pointe de fléchette (1100) est entraîné en utilisant un ensemble de données d'entraînement comportant des données d'image d'entraînement comportant au moins deux images photographiées de la cible de fléchette frappée par la pointe de fléchette, photographiées par lesdits au moins deux appareils de prise de vues (140) à partir de directions différentes, et des données d'étiquetage comportant des informations d'emplacement de frappe de la pointe de fléchette correspondant aux données d'image d'entraînement.

12. Procédé selon la revendication 11, dans lequel les données d'étiquetage comportent des informations d'emplacement de bit indiquant des informations d'emplacement d'un bit dans un segment de la cible de fléchette.

13. Procédé selon la revendication 11, dans lequel les données d'étiquetage comportent des informations d'historique permettant d'identifier un lancer de pointe de fléchette actuel qui fait l'objet d'un entraînement dans au moins deux images photographiées de la cible de fléchette frappée par la pluralité de lancers de pointes de fléchette antérieurs.

14. Procédé selon la revendication 13, dans lequel les informations d'historique comportent au moins l'une parmi une valeur de score déterminée sur la base d'un lancer de pointe de fléchette ou des informations d'emplacement de la pointe de fléchette déterminées sur la base d'un lancer de pointe de fléchette.

15. Procédé selon la revendication 13, dans lequel le modèle de réseau neuronal d'identification d'emplacement de pointe de fléchette (1100) détermine un lancer de pointe de fléchette antérieur à exclure dans un processus d'entraînement à partir des informations d'historique incluses dans les données d'étiquetage, à partir de la pluralité de lancers de pointe de fléchette antérieurs.

16. Procédé selon la revendication 4, dans lequel l'image de partie est affichée de sorte qu'au moins un segment dans la cible de fléchette correspondant aux premières informations d'emplacement de la première pointe de fléchette et aux deuxièmes informations d'emplacement de la deuxième pointe de fléchette dépasse par rapport à d'autres segments de la cible de fléchette afin de comparer la première distance à la seconde distance.

17. Dispositif de jeu de fléchettes (1000) permettant de fournir un jeu de fléchettes, le dispositif de jeu de fléchettes (1000) comprenant :
une unité d'appareil de prise de vues (140) permettant d'obtenir, en réponse à un premier lancer d'une première pointe de fléchette, une première image correspondant à une cible de fléchette comportant la première pointe de fléchette, et permettant d'obtenir, en réponse à un deuxième lancer d'une deuxième pointe de fléchette, une deuxième image correspondant à la cible de fléchette comportant la deuxième pointe de fléchette, dans lequel la cible de fléchette comporte une pluralité de segments, et chaque segment comporte un nombre prédéterminé de bits ; et
une unité de commande (100) permettant de générer des premières informations d'emplacement de la première pointe de fléchette correspondant à la première image et des deuxièmes informations d'emplacement de la deuxième pointe de fléchette correspondant à la deuxième image en utilisant un modèle de réseau neuronal d'identification d'emplacement de pointe de fléchette (1100) basé sur l'intelligence artificielle, et permettant de générer un résultat de partie pour le jeu de fléchettes comportant le premier lancer et le deuxième lancer en utilisant les premières informations d'emplacement et les deuxièmes informations d'emplacement, dans lequel les premières informations d'emplacement comportent un emplacement de bit dans un segment frappé par la première pointe de fléchette, et les deuxièmes informations d'emplacement comportent un emplacement de bit dans un segment frappé par la deuxième pointe de fléchette,
dans lequel le résultat de partie pour le jeu de fléchettes comporte des informations indiquant un joueur qui gagne en lançant l'une quelconque de la première pointe de fléchette et de la deuxième pointe de fléchette à un emplacement proche d'un emplacement spécifique de la cible de fléchette parmi une pluralité de joueurs lançant les pointes de fléchette en comparant une première distance de l'emplacement spécifique de la cible de fléchette à un emplacement de bit dans un segment frappé par la première pointe de fléchette, et une seconde distance de l'emplacement spécifique de la cible de fléchette à un emplacement de bit dans un segment frappé par la deuxième pointe de fléchette ;
**caractérisé en ce que** l'unité d'appareil de prise de vues (140) comprend au moins deux appareils de prise de vues (140) positionnés chacun dans une direction prédéterminée respective, connectée au dispositif de jeu de fléchettes (1000), pour obtenir la première image et la deuxième image, dans lequel l'obtention de la première image comporte l'obtention de la première image comportant une première image 1 et une première image 2 de la cible de fléchette frappée par la première pointe de fléchette, photographiée par lesdits au moins deux appareils de prise de vues (140) à partir de directions différences en réponse au premier lancer de la première pointe de fléchette, et l'obtention de la deuxième image comporte l'obtention de la deuxième image comportant une seconde image 1 et une seconde image 2 de la cible de fléchette frappée par la deuxième pointe de fléchette, photographiée par lesdits au moins deux appareils de prise de vues (140) à partir de directions différentes en réponse au deuxième lancer de la deuxième pointe de fléchette ;
dans lequel la génération des premières informations d'emplacement de la première pointe de fléchette correspondant à la première image et des deuxièmes informations d'emplacement de la deuxième pointe de fléchette correspondant à la deuxième image en utilisant le modèle de réseau neuronal d'identification d'emplacement de pointe de fléchette (1100) basé sur l'intelligence artificielle comporte :
la génération de premières données d'entrée en réalisant une opération de fusion sur la première image 1 et la première image 2 de la cible de fléchette frappée par la première pointe de fléchette, photographiée par lesdits au moins deux appareils de prise de vues (140) à partir de directions différentes, et la génération de secondes données d'entrée en réalisant une opération de fusion sur la seconde image 1 et la seconde image 2 de la cible de fléchette frappée par la deuxième pointe de fléchette, photographiée par lesdits au moins deux appareils de prise de vues (140) à partir de directions différentes ; et
la génération des premières informations d'emplacement de la première pointe de fléchette correspondant à la première image à partir des premières données d'entrée et la génération des deuxièmes informations d'emplacement de la deuxième pointe de fléchette à partir des secondes données d'entrée correspondant à la deuxième image, en utilisant le modèle de réseau neuronal d'identification d'emplacement de pointe de fléchette (1100).

18. Programme informatique stocké dans un support de stockage lisible par ordinateur, le programme informatique permettant à au moins un processeur de réaliser des opérations permettant de fournir un jeu de fléchettes lorsqu'il est exécuté par l'au moins un processeur, les opérations comprenant :
une opération consistant à obtenir, en réponse à un premier lancer d'une première pointe de fléchette, une première image correspondant à une cible de fléchette comportant la première pointe de fléchette, dans lequel la cible de fléchette comporte une pluralité de segments, et chaque segment comporte un nombre prédéterminé de bits ;
une opération consistant à obtenir, en réponse à un deuxième lancer d'une deuxième pointe de fléchette, une deuxième image correspondant à la cible de fléchette comportant la deuxième pointe de fléchette ;
une opération consistant à générer de premières informations d'emplacement de la première pointe de fléchette correspondant à la première image et de deuxièmes informations d'emplacement de la deuxième pointe de fléchette correspondant à la deuxième image en utilisant un modèle de réseau neuronal d'identification d'emplacement de pointe de fléchette (1100) basé sur l'intelligence artificielle, dans lequel les premières informations d'emplacement comportent un emplacement de bit dans un segment frappé par la première pointe de fléchette, et les deuxièmes informations d'emplacement comportent un emplacement de bit dans un segment frappé par la deuxième pointe de fléchette ; et
une opération consistant à générer un résultat de partie pour le jeu de fléchettes comportant le premier lancer et le deuxième lancer en utilisant les premières informations d'emplacement et les deuxièmes informations d'emplacement,
dans lequel le résultat de partie pour le jeu de fléchettes comporte des informations indiquant un joueur qui gagne en lançant l'une quelconque de la première pointe de fléchette et de la deuxième pointe de fléchette à un emplacement proche d'un emplacement spécifique de la cible de fléchette parmi une pluralité de joueurs lançant les pointes de fléchette en comparant une première distance de l'emplacement spécifique de la cible de fléchette à un emplacement de bit dans un segment frappé par la première pointe de fléchette, et une seconde distance de l'emplacement spécifique de la cible de fléchette à un emplacement de bit dans un segment frappé par la deuxième pointe de fléchette ;
**caractérisé en ce que** la première image et la deuxième image sont obtenues par une unité d'appareil de prise de vues (140), comprenant au moins deux appareils de prise de vues (140) positionnés chacun dans une direction prédéterminée respective, connectée au dispositif de jeu de fléchettes (1000),
dans lequel l'obtention de la première image comporte l'obtention de la première image comportant une première image 1 et une première image 2 de la cible de fléchette frappée par la première pointe de fléchette, photographiée par lesdits au moins deux appareils de prise de vues (140) à partir de directions différentes en réponse au premier lancer de la première pointe de fléchette, et
dans lequel l'obtention de la deuxième image comporte l'obtention de la deuxième image comportant une seconde image 1 et une seconde image 2 de la cible de fléchette frappée par la deuxième pointe de fléchette, photographiée par lesdits au moins deux appareils de prise de vues (140) à partir de directions différentes en réponse au deuxième lancer de la deuxième pointe de fléchette ;
dans lequel la génération des premières informations d'emplacement de la première pointe de fléchette correspondant à la première image et des deuxièmes informations d'emplacement de la deuxième pointe de fléchette correspondant à la deuxième image en utilisant le modèle de réseau neuronal d'identification d'emplacement de pointe de fléchette (1100) basé sur l'intelligence artificielle comporte :
la génération de premières données d'entrée en réalisant une opération de fusion sur la première image 1 et la première image 2 de la cible de fléchette frappée par la première pointe de fléchette, photographiée par lesdits au moins deux appareils de prise de vues (140) à partir de directions différentes, et la génération de secondes données d'entrée en réalisant une opération de fusion sur la seconde image 1 et la seconde image 2 de la cible de fléchette frappée par la deuxième pointe de fléchette, photographiée par lesdits au moins deux appareils de prise de vues (140) à partir de directions différentes ; et
la génération des premières informations d'emplacement de la première pointe de fléchette correspondant à la première image à partir des premières données d'entrée et la génération des deuxièmes informations d'emplacement de la deuxième pointe de fléchette à partir des secondes données d'entrée correspondant à la deuxième image, en utilisant le modèle de réseau neuronal d'identification d'emplacement de pointe de fléchette (1100).
